Europäisches Patentamt

European Patent Office

Office européen des brevets

(11) Publication number: **0 597 160 A1**

# EUROPEAN PATENT APPLICATION

(21) Application number: **92403066.1**

(22) Date of filing: **13.11.92**

(51) Int. Cl.5: **H04N 9/78**

(43) Date of publication of application:
**18.05.94 Bulletin 94/20**

(84) Designated Contracting States:
**AT BE CH DE DK ES FR GB GR IE IT LI LU MC NL PT SE**

(71) Applicant: **THOMSON CONSUMER ELECTRONICS S.A.**
**9, Place des Vosges,**
**La Défense 5**
**F-92400 Courbevoie(FR)**

(72) Inventor: **Boie, Werner**
**15, rue du Ziegelfeld**
**F-67100 Strasbourg(FR)**
Inventor: **Watrin, Thierry**
**7, rue des Bornes**
**F-67200 Strasbourg(FR)**

(74) Representative: **Einsel, Robert, Dipl.-Ing.**
**Deutsche Thomson-Brandt GmbH**
**Patent- und Lizenzabteilung**
**Göttinger Chaussee 76**
**D-30453 Hannover (DE)**

(54) Method and apparatus for luminance/chrominance separation.

(57) Present analogue SECAM decoded pictures suffer from various deficiencies like low luminance resolution and cross talk effects between luminance and chrominance. Because of frequency overlapping in the higher frequency part of the video signal and the lack of special frequency characteristics of the FM modulated chrominance signal, as opposed to the NTSC or PAL standards, no straightforward solution of a "clean" Y/C separation for all kinds of pictures can be achieved. A matched filter separates the SECAM signal into various signal paths. Multi-burst structures (0242) and edges (0258) are detected in the SECAM signal and control the adding of the luminance highpass component to the crosstalk-free lowpass component. The algorithm is capable of reproducing vertical edges with a maximum of sharpness and recovering a maximum resolution in horizontal direction.

Fig. 2

The present invention relates to a method and to an apparatus for luminance/chrominance separation.

Background

Present analogue SECAM decoded pictures suffer from various deficiencies like:
- 12.5 Hz edge flickering;
- bad chrominance transitions;
- low SNR in the chrominance signals;
- low luminance resolution;
- cross talk effects between luminance and chrominance.

Compared to other TV standards remarkable improvements have been made there in the last years by using digital signal processing techniques. Due to frequency combing of the luminance (Y) and chrominance (C) signal within the same transmission channel a solution for a sensible Y/C separation in PAL or NTSC was more or less straightforward. On contrast, the FM modulation of the chrominance in the SECAM standard has been an insurmountable obstacle for an improved Y/C separation in the past. In present digital SECAM decoder chips (multi-standard decoder) which are on the market, still the same deficiencies of the above list can be identified.

Invention

It is one object of the invention to disclose a method for improving Y/C separation and Y resolution prior to SECAM decoding. This object is reached by the methods disclosed in claim 1 and claim 2.

It is a further object of the invention to disclose an apparatus which utilises the inventive method. This object is reached by the apparatus disclosed in claim 12.

EP-A-91403066, EP-A-91403382 and EP-A-92401669 cope with a first part of the deficiencies listed above and can be combined advantageously with the present invention.

The invention deals with the last two items of the list.

An improved Y/C separation method is presented which ensures on one hand a suppression of the cross talk effects between the luminance and chrominance signals and allows on the other hand a significant improvement of the luminance resolution. An enhancement of the chrominance resolution is not achievable due to the strong bandwidth limitation at transmitter side while an improvement of the chrominance transition can be added by means of an appropriate CTI (chrominance transients improvement) technique.

Because of frequency overlapping in the higher frequency part of the video signal and the lack of special frequency characteritics of the FM modulated chrominance signal, as opposed to the NTSC or PAL standards, it is not very likely to expect a straightforward solution of a "clean" Y/C separation for all kinds of pictures. Therefore some well defined restrictions have to impose on the desired Y/C separation algorithm, but the algorithm is capable of reproducing vertical edges with a maximum of sharpness and recovering a maximum resolution in horizontal direction. The latter holds especially for the luminance multi-burst in the Philips test chart. Cross colour in the latter pattern can be avoided.

Different concepts have been investigated:

Tracked filter:

A relatively small notch filter is following with its notch frequency the current FM subcarrier frequency. Because of this only a small frequency region should be suppressed in the video signal which implies in general a higher bandwidth and consequently a better resolution of the luminance signal. The fundamental drawback of this approach is directly related to the control of the notch frequency of the filter. It necessitates a control circuit like a PLL with a sufficient transient response to track the current frequency variation of the FM burst quite exactly. In literature there is no technique known which allows to follow the frequency deviation of a vestigial sideband frequency modulation at chrominance transitions adequately. Moreover, it raises the question how the control circuit can distinguish between a luminance multi-burst and the FM subcarrier, because the FM demodulator as well as the PLL will lock on the frequency with the higher amplitude, and this is in the regarded case the luminance multi-burst. A quite similar concept to that based on different selectable relatively small notch filters is proposed by ITT Intermetal for its SECAM decoder in the multi standard decoder IC but criterias for the filter selection are not known.

Multidimensional filtering:

Although the FM modulated chrominance signal does not show a certain frequency characteristic in the video signal a three dimensional frequency spectrum can be derived for the two temporally modulated rest frequencies of he FM modulator. The analysis indicates that the un-modulated subcarriers occupy spaces in the three dimensional frequency domain similar to PAL and that these frequency components could be suppressed by a vertical temporal filter (like in Q-PAL). Unfortunately, this approach can at least only work for un-coloured pictures. In addition to that, practical results have shown that even for this unrealistic condition the algorithm does not work properly. This is due to the fact that the current phase of the subcarrier is depending on the whole chrominance information from the beginning of the line. Computer simulations have turned out that sometimes in adjacent lines for the same pixel the subcarrier can have quite the same phase although the subcarrier frequency is quite different. In this case no conceivable linear filter can achieve a sufficient subcarrier suppression.

Compensation technique:

This method is based on finding the true chrominance signal and subtracting it after the reproduction from the composite signal to achieve the correct luminance signal, or vice versa. In case of frequency overlapping there is no general solution available of finding the true components.

Matched filter:

By means of a correlation filter or any kind of nonlinear filtering it can be tried to select certain patterns of the composite signal like the luminance multi-burst. Nonlinear filters seem to offer a more effective suppression but they cannot solve the problem in general. Unfortunately, for this kind of filters there is no filter design available and the selection of different output patterns necessitates additional criterias to decide which output signal corresponds to the correct pattern.

The invention uses a combination of the matched filter technique and the compensation technique. The difference signal between a bandpass component of the incoming SECAM signal, corresponding with the shared frequency region of the luminance and chrominance signal, and the line-average filtered bandpass component is fed to a subcarrier reconstruction circuit which contains in essential a phase measurement unit and a cosine look-up-table (LUT). The reconstructed subcarrier at the output is used on one hand for the chrominance demodulator of a digital decoder chip and on the other hand for the subcarrier compensation in the bypassed composite signal which results finally in the reconstructed luminance signal.

In principle the inventive method consists in an improved luminance/chrominance separation, wherein for generating a luminance component (Y) and a chrominance component (C) from a SECAM CVBS signal filter means (011) extract the shared frequency range of luminance and chrominance of said CVBS signal, the output signal of which is fed to combining means (014) in which the output signal of said filter means (011) which also has been vertically averaged (013) over at minimum three - especially five - lines, is subtracted therefrom and that in subcarrier reconstruction means (015) subsequent to said combining means the phase of the subcarrier is measured and used for controlling a cosine look-up table which outputs the chrominance component (C), which is also subtracted (012) from the CVBS signal thereby forming the luminance component (Y).

In principle the further inventive method consists in an improved luminance/chrominance separation, wherein for generating a luminance component (Y) and a chrominance component (C) from a SECAM CVBS signal:
- the luminance component comprises the lowpass filtered (0261) crosstalk-free frequency range of the appropriately delayed (0214) CVBS signal, to which a highpass frequency range is added (0263);
- the chrominance component is generated by subtracting (0264) the luminance component from said delayed CVBS signal;
- said highpass frequency range is constricted by subtracting (0251) from said delayed CVBS signal a reconstructed subcarrier (0203) and by highpass filtering (0252 and 0254) the resulting signal complementary to said lowpass filtering (0261);
- the adding (0263) of said highpass frequency range is adaptively enabled (0259) according to the presence of horizontal luminance transitions (0258) and/or according to the presence of multi-burst structures (0242) in said CVBS signal.

Advantageous additional embodiments of the further inventive method are resulting from the respective dependent claims.

In principle the inventive apparatus is suited for generating a luminance component (Y) and a chrominance component (C) from a SECAM CVBS signal, comprising:
- first lowpass filter means (0261) which deliver a crosstalk-free frequency range of the luminance component of the CVBS signal appropriately delayed by delay means (0214), to which a highpass frequency range is added in second adding means (0263);
- second subtracting means (0264) in which the chrominance component is generated by subtracting the luminance component from said delayed CVBS signal;
- first subtracting means (0251) in which from said delayed CVBS signal a reconstructed subcarrier (0203) is subtracted, subsequent third lowpass filter means (0253) for limiting the frequency range of said delayed CVBS signal in relation to the luminance bandwidth of a TV channel and highpass filter means (0252 and 0254) which filter the resulting signal complementary to said first lowpass filter means (0261), thereby constructing said highpass frequency range;

- an edge detector (0258) detecting horizontal luminance transitions and a first soft switch (0259), supplying said second adding means (0263) with said highpass frequency range, the throughput of which is adaptively controlled according to the output of said edge detector and/or the output of cross colour detector means (0242) which detect the presence of multi-burst structures in said CVBS signal.

Advantageous additional embodiments of the inventive apparatus are resulting from the respective dependent claims.

Drawings

Preferred embodiments of the invention are described with reference to the accompanying drawings, which show in:

Fig. 1 principle of the inventive Y/C separation;

Fig. 2 inventive Y/C separator in more detail;

Fig. 3 matched filter;

Fig. 4 subcarrier reconstruction circuit;

Fig. 5 burst analysing circuit;

Fig. 6 second subcarrier reconstruction circuit with lowpass filter;

Fig. 7 cross colour detector and soft switch;

Fig. 8 first amplitude/phase separation circuit;

Fig. 9 second amplitude/phase separation circuit;

Fig. 10 edge detector;

Fig. 11 frequency response of the differentiating filter (edge detector);

Fig. 12 threshold filter (edge detector);

Fig. 13 Y lowpass filter and its frequency response;

Fig. 14 band limitation filter and its frequency response;

Fig. 15 bandpass filter and its frequency response;

Fig. 16 complementary highpass filter for the edge detector and frequence response of the related lowpass filter;

Fig. 17 principle operation of a phase reconstruction circuit;

Fig. 18 principle multiplex structure of the phase reconstruction;

Fig. 19 multiplex structure of the phase reconstruction;

Fig. 20 phase interpolator;

Fig. 21 amplitude interpolator;

Fig. 22 pointer diagram;

Fig. 23 combined Hilbert filter and phase averager.

Preferred embodiments

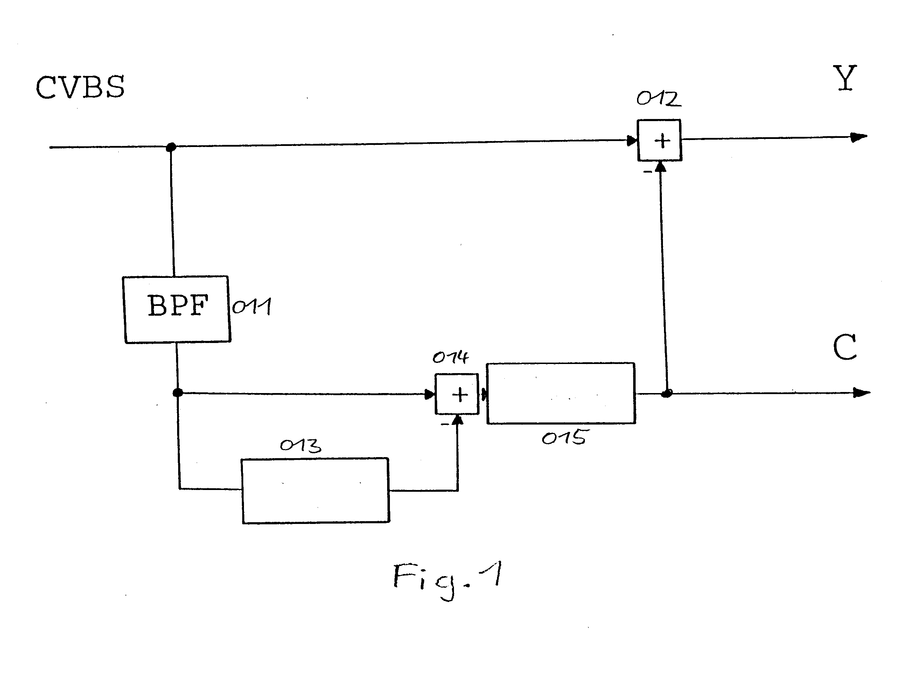

Fig. 1 shows a simplified block diagram of the inventive Y/C separation. For the subcarrier reconstruction from the incoming signal CVBS a bandpass component is selected in a bandpass filter 011 corresponding with the shared frequency region of the luminance and chrominance signal in the composite signal CVBS This bandpass signal goes into a matched filter 013 which consists in principle of a vertical 5-line averaging circuit. The difference between the resulting output signal and the bypassed bandpass signal which is calculated in a subtractor 014, represents the input signal of the following subcarrier reconstruction circuit 015. It contains in essential a phase measurement unit and a cosine look-up-table. The reconstructed subcarrier C at the output is used on one hand for the chrominance demodulator of a digital SECAM decoder chip and on the other hand for the subcarrier compensation in the bypassed composite signal CVBS by subtracting from it in subtractor 012 signal C, which results finally in the reconstructed luminance signal Y.

The task of the matched filter 013 consists here of selecting a multi-burst structure in the luminance signal as it can be found in the Philips test chart. The average over five lines leads to a selection of vertical structures and a quite small amplitude of the resulting subcarrier. The selected vertical structure is hereafter substracted from the bandpass signal so that only the subcarrier of the current line remains. In this respect it is important that the rest amplitude of the subcarrier of the neighbouring lines is negligible compared to the subcarrier amplitude of the current line. Negligible in this context means that the following phase measurement circuit can still suppress the irritating phase information of the neighbouring lines. It is indeed an essential point in the whole processing that the phase measurement circuit is more tolerable against the remainder of the amplitude of the subcarrier than the human eye will do by watching the remainder of the amplitude of the subcarrier on the screen.

In a more general approach the matched filter 013 can be realised with spatial adaptivity. According to the current orientation of the periodic structure in the picture a one-dimensional filter will be selected that way that the filtering is active in a certain spatial direction.

The above presented approach exhibits certain drawbacks which result from a non-perfect subcarrier reconstruction. There is a certain risk in subtracting the reconstructed subcarrier from the composite signal if the quality of the reconstructed subcarrier is not always guaranteed.

First, in plain areas the remainder of the subcarrier amplitude is occasionally still visible. The structure of the matched filter causes problems in plain coloured areas in which the two FM subcarriers have a quite different frequency. Due to the anti-bell filter in the SECAM encoder, this fact results in a different subcarrier amplitude in each second line of the composite signal. Consequently, the vertical average over five lines may not work properly. The appearance of the remainder of the subcarrier amplitude in the reconstructed picture is quite annoying.

Secondly, near chrominance transitions the subcarrier regeneration exhibits as extremely difficult because of the abruptly changing FM frequency and the amplitude modulation caused by the anti-bell filter in the SECAM encoder. In the worst case it may happen that the phase of the reconstructed subcarrier is inverse to the actual subcarrier phase, resulting in a still larger subcarrier amplitude in the reconstructed picture.

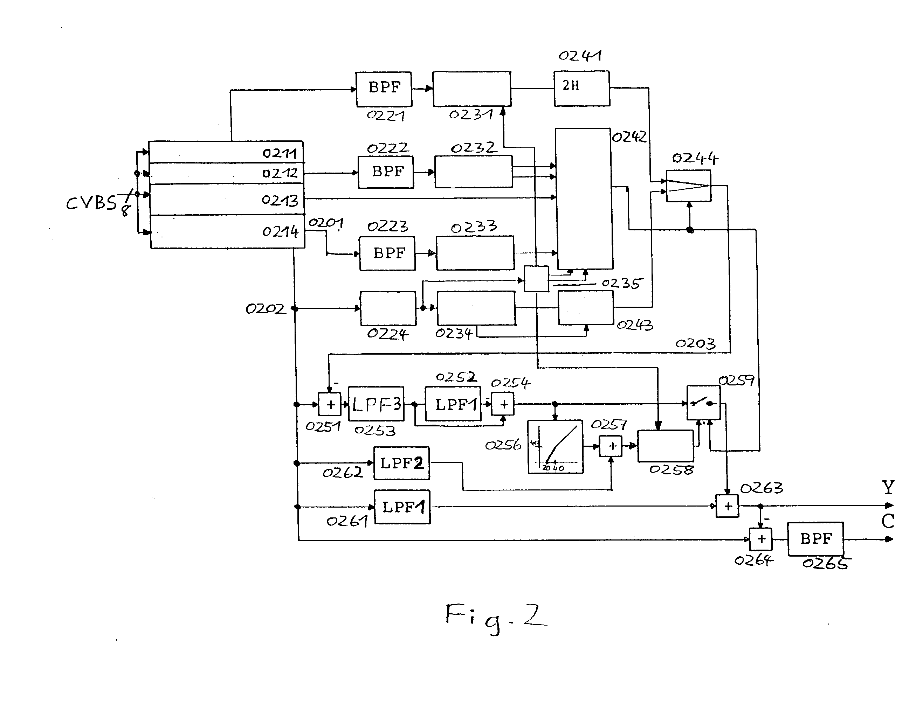

Therefore, the structure of the Y/C separation is modified according to Fig. 2. The incoming SECAM signal CVBS is fed to a matched filter circuit representing a vertical highpass filter 0211, a vertical lowpass filter 0212, a vertical transition detector 0213 and delay means 0214. The delay means of the matched filter output a two-line-delayed signal 0201 and a four-line-delayed signal 0202 which is fed to a fourth bandpass filter 0224, to a first subtractor 0251, to a first lowpass filter 0261, to a second lowpass filter 0262 and to a second subtractor 0264. Lowpass filter 0262 outputs only that part of the composite signal which is free from any cross talk (cross luminance) and is connected to a first adder 0257.

In subtractor 0251 the composite signal is compensated by subtracting from itself a reconstructed subcarrier 0203. The output signal of subtractor 0251 is bandlimited to 6MHz in a third lowpass filter 0253. After highpass filtering, which is carried out by subtracting in a third subtractor 0254 from its input signal a signal having been complementary filtered in a fourth lowpass filter 0252 (identical to filter 0261), the output signal which corresponds to the shared frequency region of Y and C is fed to a soft switch 0259 and to a coring circuit 0256 which suppresses high frequencies of low amplitude.

The output signal of the coring circuit is combined in adder 0257 with the output signal of lowpass filter 0262 and forms the main input signal of an edge detector 0258. The output of the edge detector and/or of a cross colour detector 0242 control soft switch 0259. In a second adder 0263 the output signal of soft switch 0259 is combined wish the output of the first lowpass filter 0261, resulting in the final Y output signal.

Lowpass filters 0261 and 0262 may have the same frequency response and be replaced by a single filter. However, for reaching a peaking of the edge detector's input signal ( as explained later) the edge frequency of filter 0262 can be made slightly higher than the edge frequency of filter 0261. Signal Y is subtracted in subtractor 0264 from the four-line-delayed signal 0202, whereby a cross talk free FM burst is obtained. A following fifth bandpass filter 0265 reduces the noise bandwidth, resulting in the final C output signal.

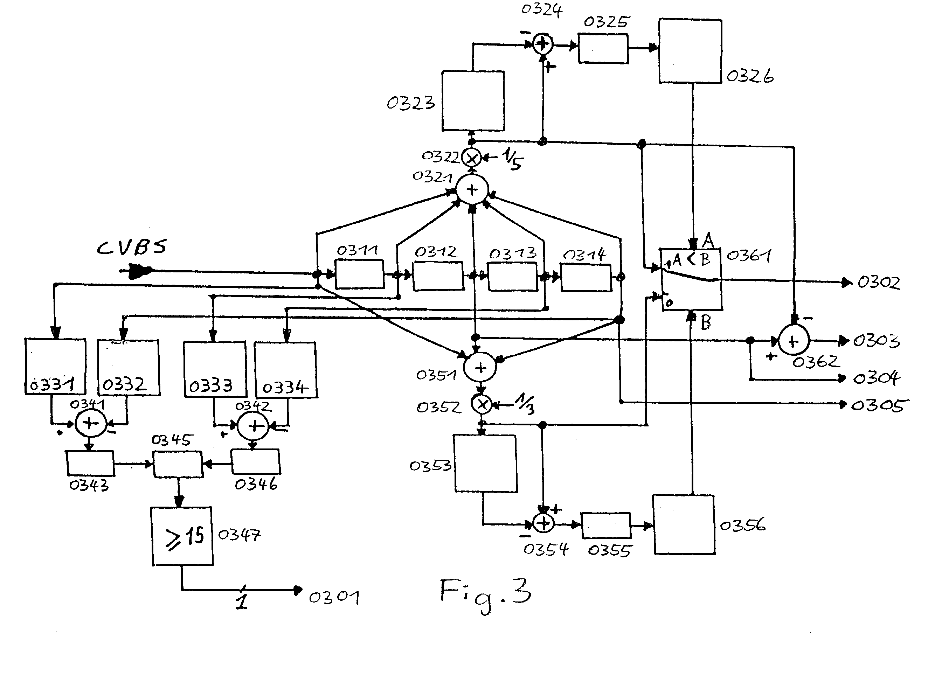

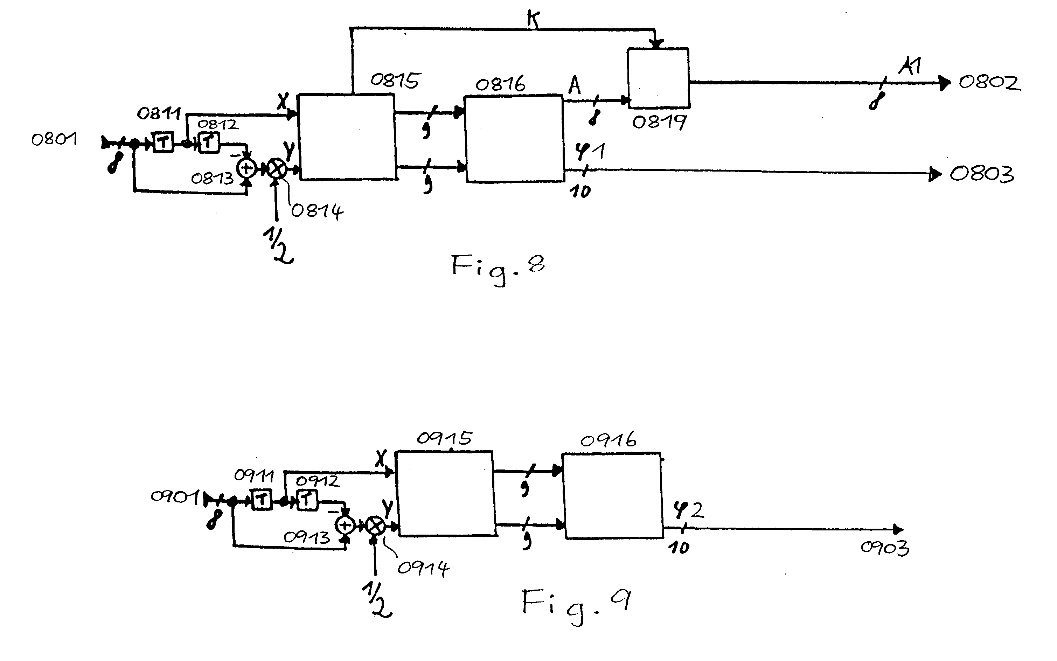

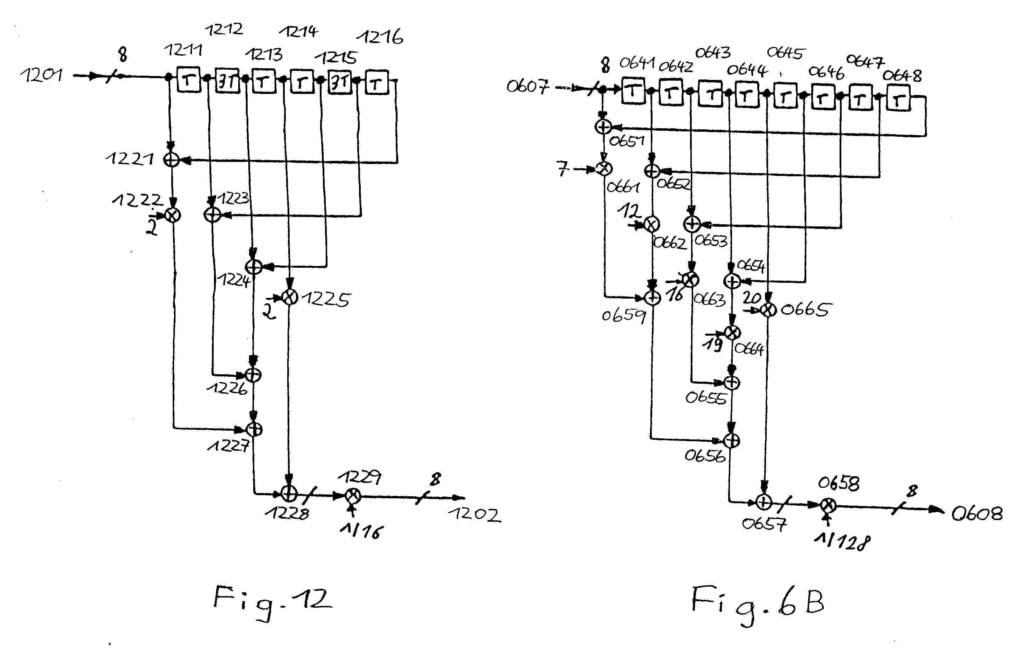

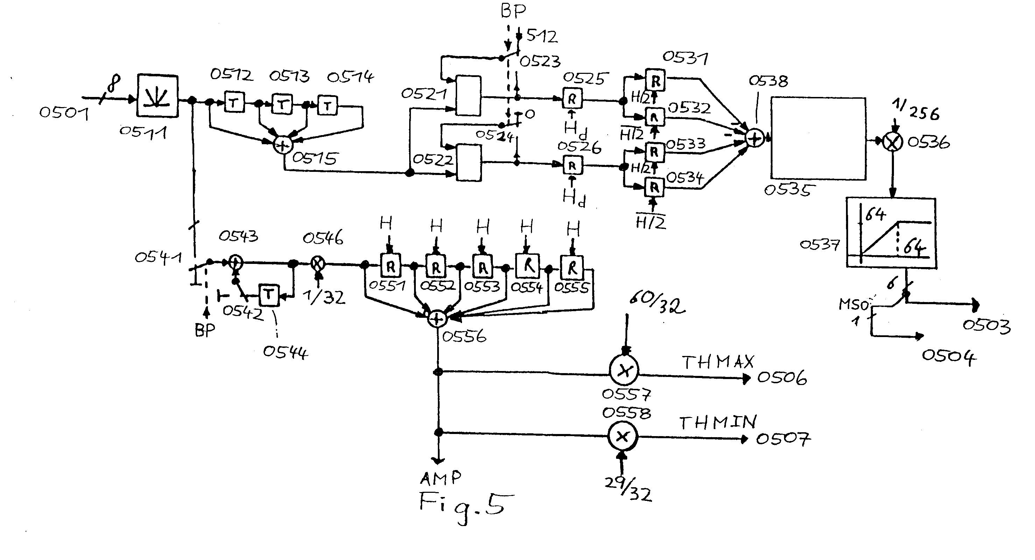

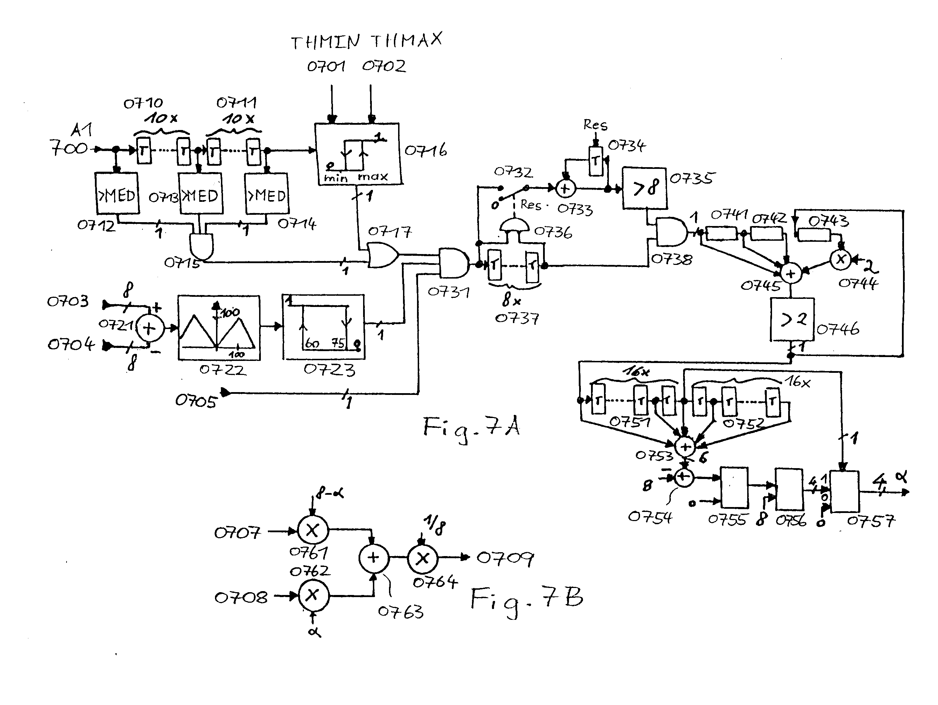

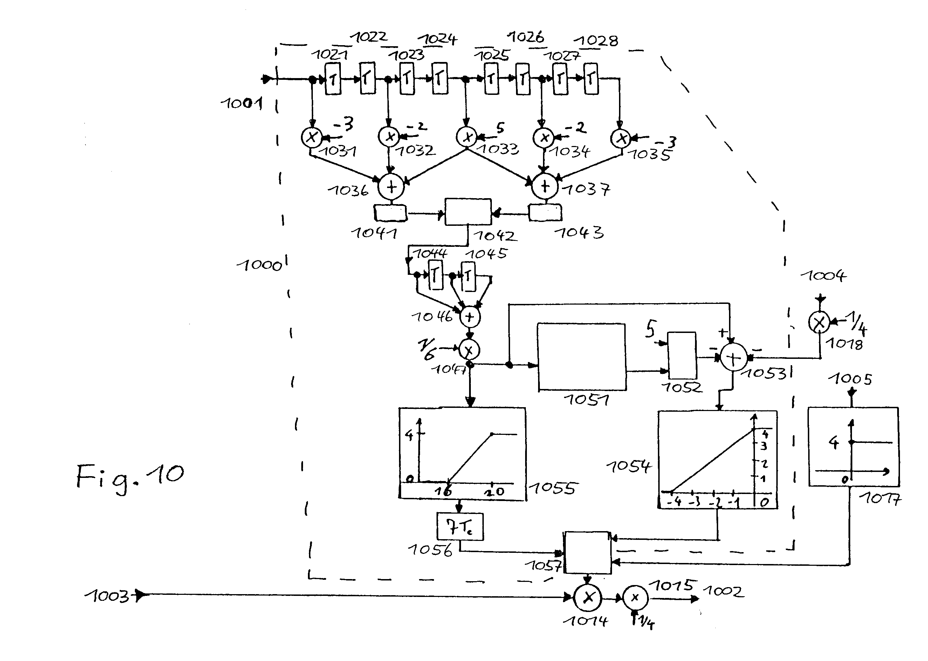

Edge detector 0258 will be described in connection with Fig. 10 and the matched filter in conjunction with Fig. 3. The reconstruction of subcarrier 0203 and the decision strategy for cross colour (i.e. multi-burst structure) detector 0242 are the most complex and critical processing part of the inventive Y/C separation. Cross colour detector 0242 will be described in connection with Fig. 7.

For the subcarrier reconstruction two paths are implemented: One which is used in case of a detected multi-burst structure and the other one in all other cases.

The latter comprises:
- a bandpass filter 0224, the input of which is connected to the four-line-delayed signal 0202 and the output of which controls via a burst analysing circuit 0235 the cross colour detector 0242;
- a following second subcarrier reconstruction circuit 0234 containing a phase measurement and a cosine LUT, the two outputs of which control an envelope modulator 0243 which imitates the behaviour of an anti-bell filter for the correct amplitude reconstruction of the subcarrier and which is connected to the second input of a second soft switch 0244.

The first subcarrier reconstruction path comprises:
- a first bandpass filter 0221 following vertical highpass filter 0211;
- a following first subcarrier reconstruction circuit 0231 containing a phase measurement and a cosine LUT, the output of which passes a two-line delay 0241 and feeds the first input of second soft switch 0244.

Both signal paths for the subcarrier regeneration are combined in second soft switch 0244, controlled by cross colour detector 0242 and delivering the reconstructed subcarrier 0203.

The output of vertical lowpass filter 0212 passes a second bandpass filter 0222 and a first amplitude/phase separation circuit 0232. Outputs ARG and MOD of this circuit are fed to cross colour detector 0242 together with the output signal of vertical transition detector 0213 and the output signal ARG of a second amplitude/phase separa-

tion circuit 0233. The two-line-delayed signal 0201 passes a third bandpass filter 0223 and a second amplitude/phase separation circuit 0233.

Several criterias have been found for indicating in cross colour detector 0242 the occurrence of a multi-burst structure in the luminance. Obviously, the amplitude of the bandpass signal in burst analysing circuit 0235 can give an indication, if the amplitude differs significantly from the FM burst amplitude evaluated for the unmodulated subcarrier in the burst period at the back porch (burst analysis) of the composite signal. For a multi-burst with a maximum of modulation depth (like in the Philips test chart) this criteria is sufficient, but for natural pictures the difference between the two amplitudes can become quite small or undistinguishable.

Therefore, another criteria is needed which takes the regular structure of the multi-burst into account. For that reason a phase comparison between the subcarrier phase of the current line and the resulting phase of a five-line averaged subcarrier is carried out in vertical lowpass filter 0212.

In the absence of a multi-burst structure both phases are most of the time different, but if a multi-burst structure appears, both phases will become similar.

A further problem arises at the beginning or at the end of a periodic structure in vertical direction. In these areas the decision is not very reliable because only a certain part of the periodic structure is captured by the filter window of the matched filter. For that reason the cross colour detector is disabled near vertical transitions via vertical transition detector 0213.

The recovery of a multi-burst structure in the luminance signal makes necessary a parallel processing path for the subcarrier phase reconstruction, beginning in the matched filter of Fig. 3. The basic idea consists of a certain kind of vertical highpass filter capable of suppressing a regular vertical structure without manipulating the FM subcarrier in the current line. In doing this, it is essential to keep the influence of the subcarrier in the neighbouring lines on the subcarrier of the current line as small as possible. This approach leads to a weighting of the neighbouring lines by a factor of $-1/n$, wherein n represents the number of the neighbouring lines involved in the filter process. The current line then has to be weighted by a coefficient of $+1$ in order to achieve a vertical highpass filter with ideal suppression at $f_y = 0$. The smallest filter which supplies quite acceptable results possesses the coefficients -1/4, -1/4, $+1$, -1/4, -1/4.

In Fig. 3 signal CVBS passes a first 0311 a second 0312, a third 0313 and a fourth 0314 line delay. Signal CVBS and the outputs of these four line delays are added in a first adder 0321, multiplied by factor 1/5 in a first multiplier 0322 and fed to a first 4pixel-averager 0323, a first subtractor 0324 and the first input of comparing switch 0361 and are subtracted in a second subtractor 0362 from the output of second line delay 0312, resulting in output signal 0303 of the vertical highpass filter 0211 of Fig. 2, whereby the five filter coefficients mentioned above are used (-1/5, -1/5, 1-1/5, -1/5, -1/5 multiplied by 5/4).

In subtractor 0324 the output of 4pixel-averager 0323 is subtracted from the input signal of the averager and passed through a first absolute value circuit 0325 and a second 4pixel-averager 0326 to a first control input A of comparing switch 0361.

Signal CVBS and the outputs of line delay- 0312 and 0314 are added in a second adder 0351, multiplied by factor 1/3 in a second multiplier 0352 and fed to a third 4pixel-averager 0353, a third subtractor 0354 and the second input of comparing switch 0361.

In subtractor 0354 the output of 4pixel-averager 0353 is subtracted from the input signal of the averager and passed through a second absolute value circuit 0355 and a fourth 4pixel-averager 0356 to a second control input B of comparing switch 0361. If A<B, the output 0302 of this switch is connected to the first input, else to the second input, representing the output signal of vertical lowpass filter 0212.

Output 0304 represents the two-line-delayed signal 0201 and output 0305 the four-line-delayed signal 0202.

The inputs of line delays 0311, 0312 and 0314 and the output of line delay 0314 are also connected to a fifth 0331, a seventh 0333, an eighth 0334 and a sixth 0332 4pixel-averager, respectively. The output of 4pixel-averager 0332 is subtracted in a fourth subtractor 0341 from the output of 4pixel-averager 0331 and the output of 4pixel-averager 0334 is subtracted in a fifth subtractor 0342 from the output of 4pixel-averager 0333. The outputs of these two subtractors pass a third 0343 and a fourth 0346 absolute value circuit, respectively, and are compared in a maximum value circuit 0345. The maximum is compared in comparator 0347 with a preselected number, e.g. 15, which results in disabling the cross colour detector 0242 via output 0301, if the output of maximum value circuit 0345 is greater equal this number (i.e. a vertical transition was detected).

Because periodical luminance structures can also come up with different spatial orientations, the cross colour cancellation fails in for example diagonal periodic structures.

Therefore an enhanced retrieval technique can be used which allows to recover multi-burst structures in the luminance signal having any possible spatial orientation. Basically, different spatially adaptively oriented one-dimensional highpass filter outputs can be evaluated, whereby one of them is selected according to an orientation detection in the present periodic structure. The orientation detection makes necessary a certain kind of pattern recognition technique which is based on different spatial operators comprising differentiating circuits.

In this approach already for the pattern recognition a phase reconstructed signal is used as input signal. As mentioned above, a phase reconstructing circuit helps to suppress unwanted luminance signals, but in case of a multi-burst in Y the phase reconstructing circuit locks on the multi-burst and the FM burst appears suppressed. This feature is exploited for the pattern recognition to get a higher sensitivity for the detection. In order to find the orientation of the current structure, the outputs of differently oriented differentiating filters are checked. The one with the smallest output amplitude (spatially averaged) is assumed to be the one which allows the best match with the current structure in the luminance signal, and the corresponding highpass filter (with at least 4 line delays) for the composite signal is selected.

The differentiating filter set used in the orientation detection (not depicted) comprises 5 different filters of 3*3 matrixes, only having coefficients of ±1 and 0. For the selection process a more or less continuous signal is derived rather than a 5-step signal. The finer precision of the angle of the detected structure leads to a more reliable selection after this signal has been averaged over 3 lines. By means of a 5-step quantization the corresponding highpass filter is selected. In principle there is also a highpass filter with more than 5 different spatial directions possible for which the same derived detection signal could be applied. An orientation adaptive highpass filter would consume two up to four additional line delays.

The subcarrier reconstruction circuits 0231 and 0234 shown in Fig. 4A in more detail comprise in essential a Hilbert filter, a Cordic processor 0416, and a cosine LUT 0417. Cordic processing is published in "The CORDIC Trigonometric Computing Technique", J.E. Volder, IRE Transactions on electronic computers, September 1959, pp. 330 - 334. 8-bit input 0401 of the Hilbert filter is connected to a first one-clock delay 0411 and to a subtractor 0413. The output of delay 0411 is connected to the input of a second one-clock delay 0412, the output of which is subtracted in subtractor 0413 from the input signal 0401. Clock frequency is 17.75 MHz.

The output of the subtractor is multiplied by 1/2 in a first multiplier 0414. At the output of delay 0411 the inphase signal X and at the output of multiplier 0414 the quadrature signal Y are available for the Cordic processor 0416 in order to calculate the current angle between these two input signals. An automatic barrel shifter 0415 located between the Hilbert filter and the Cordic processor outputs 9-bit values and serves for achieving a high accuracy for smaller input values, too, because the Cordic processor 0416 is implemented with a restricted number of bits. The angle $\rho$ evaluated in this processor corresponds to the current phase of the FM subcarrier and goes with 10-bit resolution into cosine LUT 0417 to re-modulate a cosine wave. A succeeding second multiplier 0418 with factor AMP/4 ensures that the reconstructed subcarrier amplitude is adapted to an amplitude AMP, which is evaluated in the burst period at the beginning of the lines within burst analysis circuit 0235. The amplitude A1 of the reconstructed subcarrier is available at a second output of processor 0416 and the standardised subcarrier with correct phase at the output 0403 of multiplier 0418.

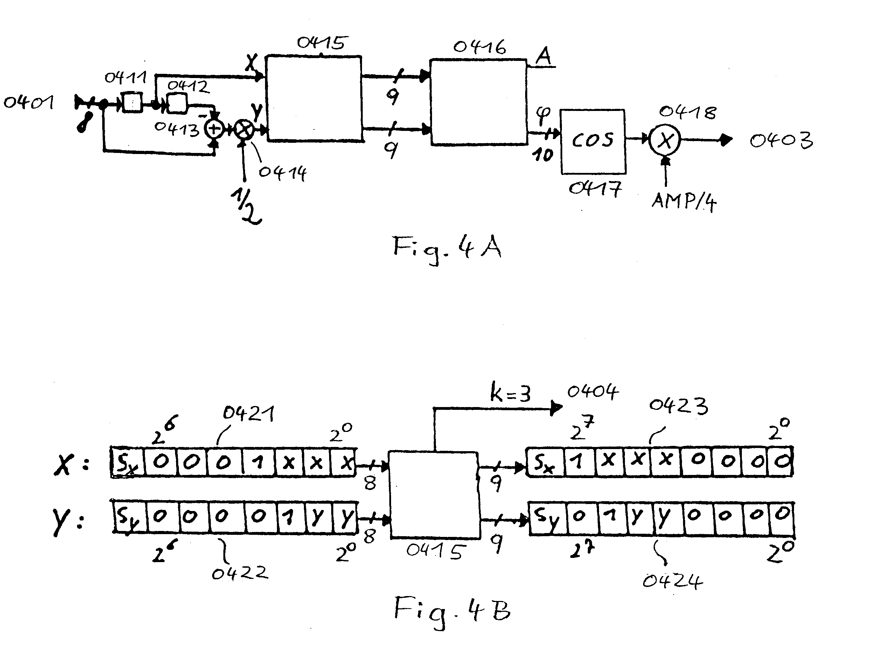

The operation of barrel shifter 0415 is depicted in Fig. 4B. The incoming 8-bit words 0421 and 0422 for X and Y, respectively, are automatically converted into respective 9-bit output words 0423 and 0424 in such a way, that the bits of the actual X and Y words are shifted in parallel to the left until a maximum LSB of these corresponds to $2^7$ in the 9-bit output words. The number k of the related shift operations is available at output 0404 and the new LSB's are set to zero. The MSB in the input and output words represents the related sign $S_x$ or $S_y$. Number k is used in processor 0416 to arrange output A in an respectively inverse way.

In other than multi-burst structure picture parts the phase reconstruction in conjunction with the matched filter does not work properly, so that an additional phase reconstruction path becomes necessary. This second path (mentioned in Fig. 2) is supplied by the four-line-delayed signal 0202 which is filtered in bandpass 0224. The second subcarrier reconstruction circuit 0234 and the envelope modulator 0243, both shown in Fig. 6 in more detail, operate similar to the first subcarrier reconstruction circuit 0231 shown in Fig. 4 and consist in addition of an adaptive weighting circuit 0619 which imitates the influence of the anti-bell filter at transmitter side and the attenuation within the transmission channel.

The referenced items 0601, 0603 and 0611 to 0618 and their operation correspond to the items 0401, 0403 and 0411 to 0418 of Fig. 4. Output A of cordic processor 0616 passes weighting circuit 0619 and serves as multiplying factor of multiplier 0618, resulting in an envelope modulation.

Weighting circuit 0619 is shown in Fig. 6B in more detail. The input signal 0607 passes serially eight one-clock delays 0641 to 0648. The input signal 0607 and the output of delay 0648 are combined in an adder 0651 and multiplied by factor 7 in a multiplier 0661. The outputs of delay 0641 and 0647 are combined in an adder 0652 and multiplied by factor 12 in a multiplier 0662. The outputs of delay 0642 and 0646 are combined in an adder 0653 and multiplied by factor 16 in a multiplier 0663. The outputs of delay 0643 and 0645 are combined in an adder 0654 and multiplied by factor 19 in a multiplier 0664. The outputs of multiplier 0661 and 0662 are combined in an adder 0659. The outputs of multiplier 0663 and 0664 are combined in an adder 0655. The outputs of adder 0659 and 0655 are combined in an adder 0656. The outputs of adder 0656 and multiplier 0656 are combined in an adder 0657 and multiplied in a multiplier 0658 by 1/128 (e.g. shift operation), resulting in output signal 0608.

The first amplitude/phase separation circuit 0232 is depicted in Fig. 8 in more detail. The referenced items 0801, 0803 and 0811 to 0816 and their operation correspond to the items 0401 to 0403 and 0411 to 0416 of Fig. 4. Output A of cordic processor 0816 passes a shifter 0819 which is controlled by value k of automatic barrel shifter 0815 and which multiplies with a factor $2^{-k}$ and which has an output signal A1 at output 0802. Output $\rho1$ of cordic processor 0816 is connected directly to output 0803.

The second amplitude/phase separation circuit 0233 is depicted in Fig. 9 in more detail. The referenced items 0901, 0903 and 0911 to 0916 and their operation correspond to the items 0401, 0403 and 0411 to 0416 of Fig. 4. Output A of cordic processor 0916 is not used. Output $\rho2$ of cordic processor 0916 is connected directly to output 0903.

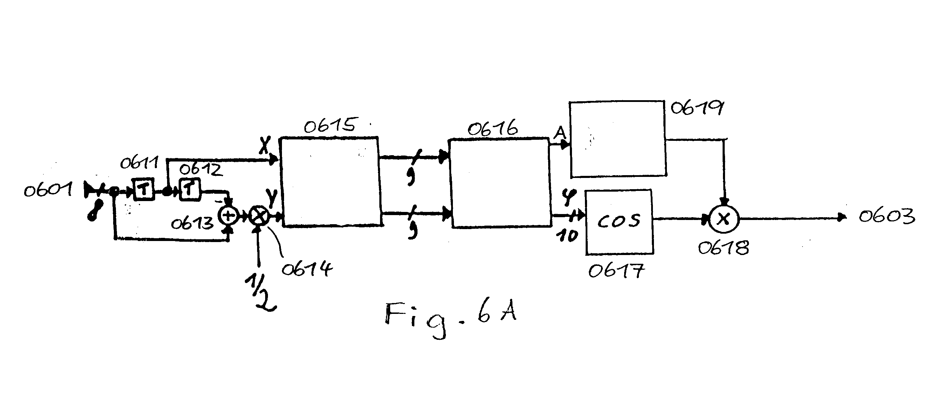

The burst analysing circuit 0235, which is depicted in Fig. 5 in more detail, receives at input 0501 the bandpass filtered four-line-delayed signal 0202. Absolute value circuit 0511 forms the absolute value, which is fed to a first switch 0541 and passes serially connected one-clock delays 0512 to 0514. The input signal of delay 0512 and the output signals of delays 0512 to 0514 are combined in a first adder 0515 which delivers its output signal to a minimum value circuit 0521 and to a maximum value circuit 0522. The second input of circuit 0521 is connected to the output of a second switch 0523 and the second input of circuit 0522 to the output of a third switch 0524. During back porch period BP the input of switch 0523 is connected to the output of circuit 0521 and the input of switch 0524 to the output of circuit 0522. Otherwise, the input of switch 0521 is connected to the value '512' and the input of switch 0524 to the value '0'. The output of each circuit 0521 and 0522 is connected to a register 0525 and 0526, which are clocked by an appropriately delayed horizontal sync pulse $H_d$. The output of register 0525 is connected to a further register 0531 being clocked with H/2 and to a further register 0532 being clocked with H/2 inverted. The output of register 0526 is connected to a further register 0533 being clocked with H/2 and to a further register 0534 being clocked with H/2 inverted. In subtractor 0538 the outputs of registers 0531 and 0532 are subtracted from the outputs of registers 0533 and 0534. In a following integration circuit 0535 the input value is integrated over 128 lines and multiplied in a subsequent first multiplier 0536 by 1/256 (e.g. a shift operation). The output signal of multiplier 0536 is limited in limiter 0537 to a value of '64' and delivered as 6-bit value to output 0503 which represents the noise level and is evaluated in edge detector 0258. Advantageously the MSB of this 6-bit value at output 0504 can be used to switch of the inventive processing in case of high noise.

Switch 0541 is operated also with signal BP. The second input is connected to ground. The output signal of switch 0541 is combined in a second adder 0543 with the output signal of a fourth switch 0542, of which one input is connected to ground, also, and the other input is connected to the output of an one-clock delay 0544. For reset the fourth switch is switched to ground. The output of adder 0543 is fed to the input of delay 0544 and to a second multiplier 0546, the multiplying factor of which is 1/32. The output signal of this multiplier passes serially connected registers 0551 to 0555 which are clocked by H. The input signal of register 0551 and the output signals of registers 0551 to 0555 are combined in a third adder 0556 which delivers its output signal AMP to a third multiplier 0557, to a fourth multiplier 0558 and two times shifted to multiplier 0418 in the first subcarrier reconstruction circuit 0231. Multiplier 0557 multiplies by a factor 60/32 and supplies cross colour detector 0242 via output 0506 with a maximum threshold THMAX and multiplier 0558 multiplies by a factor 29/32 and supplies cross colour detector 0242 via output 0507 with a minimum threshold THMIN.

As already mentioned above the detection of the occurrence of cross colour poses the greatest problems in the inventive Y/C separation. There are some plausible indications which can help to discriminate between a luminance multi-burst and the FM subcarrier. At first, in Fig. 7A at input 700 the amplitude A1 of the potential multi-burst structure at the output 0802 of amplitude/phase separation circuit 0232 is compared in three comparators 0712 to 0714 with a threshold MED, depending itself on the subcarrier amplitude AMP (see Fig. 5). The input signal of comparator 0713 is delayed by ten one-clock delays 0710 and the input signal of comparator 0714 by further ten one-clock delays 0711. Since the amplitude of the subcarrier varies with its current frequency due to the anti-bell filter in the encoder, the comparison can only be carried out for a mean amplitude of the subcarrier. A weighted value of the subcarrier amplitude during the back porch period is therefore taken for the threshold. If a multi-burst structure appears, this threshold value will be exceeded for several pixels. In order to implement a threshold as close as possible to the subcarrier amplitude, a hysteresis in a hysteresis circuit 0716 is used, which is fed with thresholds THMIN and THMAX coming from inputs 0701 and 0702 and having been calculated in burst analysing circuit 0235. Threshold MED, which is set to (THMAX + THMIN)/2, has to keep a certain safety distance from the subcarrier amplitude which does not allow a proper detection for a great deal of natural pictures For that reason a certain extension of the periodic luminance structure being longer than 20 pixels is assumed and the input signal A1 is delayed two times ten clocks before being fed to hysteresis circuit 0716. In this case it is possible to decrease the threshold level without taking a wrong decision. The outputs of the three comparators pass a first AND gate 0715. The output of this gate and the one-bit output of hysteresis circuit 0716 pass an OR gate 0717.

Another possibility to detect a multi-burst structure in the luminance signal consists of comparing the angle of the phase reconstructed signals in the current line with the one in a 5-line averaged or 3-line averaged signal, respectively. In a first subtractor 0721 the output signal 0803 of circuit 0232 at input 0704 is subtracted from the output signal 0903 of circuit 0233 at input 0703. The output signal of subtractor 0721 passes an absolute value circuit 0722, which operates modulo $\pi$, and a second hysteresis circuit 0723, which has thresholds of 60 and 75 and outputs one-bit values, and is fed to a second AND gate 0731 together with the output signal of gate 0715 and the vertical transition signal 0301 of the matched filter (Fig. 3).

The aim of the vertical average is to achieve more or less a cancellation of the subcarrier in the resulting signal. In coloured areas it can be of advantage to carry out a 3-line average over the same chrominance component to get a smaller output signal. In the absence of a multi-burst structure both measured angles will be different. If a multi-burst structure appears, both phase measuring circuits will lock on the multi-burst structure and the difference between the two angles will become small. This can be detected.

A further point concerns the beginning and the end of a periodic structure in vertical direction. Because of the filter window of the matched filter, only a part of the periodic structure can be captured, which leads to a rather uncertain decision. The result in the reconstructed pictures is a busy, that means a flickering structure at the beginning and the end of the periodic structure. To avoid this objectionable degradation the vertical transition detection is evaluated as mentioned above. In case of a vertical transition the cross colour detector will be disabled. The remaining cross colour at the beginning and the end of the periodic structure is to a certain extent suppressed by the vertical median filter in the chrominance path of the digital SECAM decoder.

All three different detection signals (comparison of the amplitudes, comparison of the phase, absence of a vertical transition) are afterwards logically AND combined in gate 0731. The minimum extension of a periodic structure is assumed to be 8 pixel long, otherwise the resulting detection signal is completely suppressed. Therefore, the output of gate 0731 passes eight serially connected one-clock delays 0737, the output of which is fed to further AND gates 0736 and 0738 and the input of which is also fed to AND gate 0736 and to a switch 0732. This switch, an adder 0733, a one-clock delay 0734 and a comparator 0735 form together a counter until eight. This counter is reset by the output of gate 0736 which sets the switch input to zero and resets one-clock delay 0734. The output of comparator 0735 is also input to gate 0738.

In vertical direction a minimum extension of 3 lines is used. The output of gate 0738 passes serially two line delays 0741 and 0742, the input and outputs respectively, of which are combined in adder 0745. The sum is compared in a comparator 0746 with value '2', the output of which passes a further line delay 0743 and a multiply-by-two circuit 0744 and is then added in adder 0745.

Since a cross colour detection cannot always be correct, another criteria is introduced to soften the resulting decision. A detected longer periodic structure is assumed to be more likely a real periodic structure. For that reason the length of the detected periodic structure is converted into an amplitude information by integrating the detection signal over a length of 32 pixels. The output of comparator 0746 passes two times 32 serially connected one-clock delays 0751 and 0752, the input and outputs, respectively, of which are combined in an adder 0753. In a subsequent subtractor 0754 the value '8' is subtracted from the output of the adder. the subtractor output signal passes a maximum value circuit 0755, a minimum value circuit 0756 a a multiplexer 0757. The second input value of circuits 0755, 0756 and 0757, respectively is '0', '8' and '0', respectively. Multiplexer 0757 is controlled by the output signal of the first group 0751 of the one-clock delays. For detected structures longer than that the resulting 4-bit cross colour detection signal $\alpha$ will reach a saturation level.

In Fig. 7B soft switch 0244 of Fig. 2 is depicted. The output signal of the two-line delay 0241 at input 0707 is weighted in multiplier 0761 by a

factor 8-α and the output signal of the envelope modulator 0243 at input 0708 is weighted in multiplier 0762 by factor α. The multiplier outputs are combined in adder 0763 and divided by value '8' in multiplier 0764 which delivers at output 0709 the reconstructed subcarrier 0203.

Investigations have turned out that a correct subcarrier phase reconstruction is not always possible. There is occasionally some rest of the subcarrier visible in the reconstructed pictures. In plain picture areas the subcarrier rest disturbs the picture quality significantly, while near transitions these distortions appear more or less masked and therefore less disturbing. For picture reconstruction the high frequency part is only relevant near transitions. Therefore, the high frequency part should only be added to the lowpass component, if a horizontal transition has been detected. Following this approach, the subcarrier has only to be reconstructed in the vicinity of transitions or fine details. Moreover, the additional noise carried in the high-pass signal is not added in plain picture parts in which it appears most disturbing.

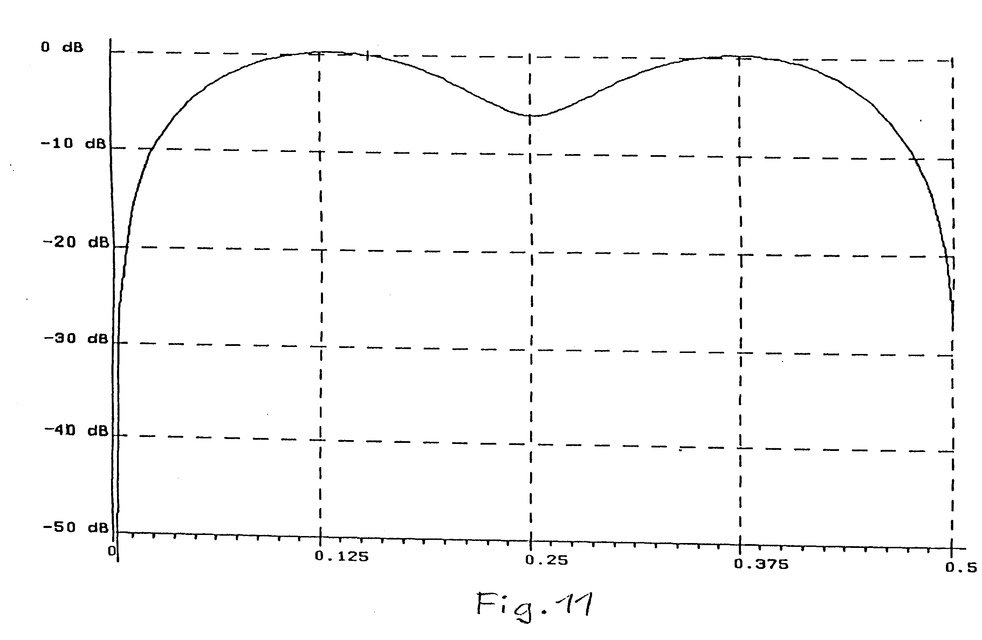

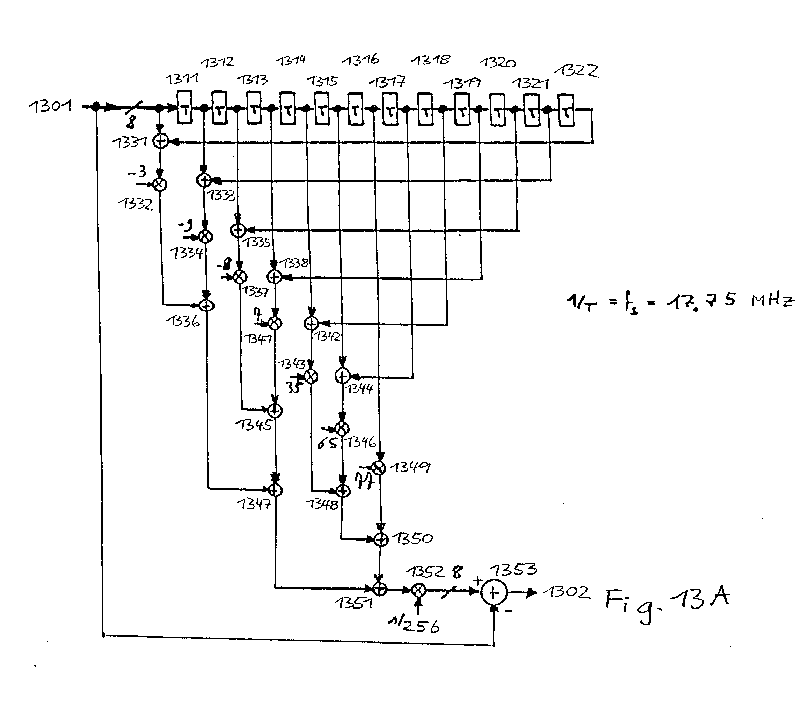

In order to get a maximum sensitivity, the edge detector 1000 in Fig. 10 takes already advantage of the full reconstructed luminance bandwidth, the high frequency components of which having been applied to coring circuit 0256. In principle the edge detector is based on the difference between each four subsequent oversampled pixels. Because of the bad frequency behaviour of the respective differentiating filter - response '0' at FM subcarrier frequency - fine details cannot be properly detected. Therefore, a slight modification has been introduced to avoid a zero crossing in the frequency response. Instead of the two coefficients '+1' and '-1' (with intermediate '0' ) which represent the simplest imaginable difference, now three coefficients are used, namely '+5', '-2', '-3' (with intermediate '0'). The resulting frequency response in Fig. 11 exhibits a significantly improved behaviour around the FM subcarrier frequency (0.25 on vertical axis).

Unfortunately the edge detector input signal 1001 received from adder 0257 after HF coring, contains still a certain remainder of the subcarrier amplitude which can lead to wrong edge detection. For that reason a symmetrical structure using two differentiating filters has been implemented. The input signal passes eight serially connected one-clock delays 1021 to 1028. The input signal of delay 1021 is weighted in a multiplier 1031 with factor '-3', the output signal of delay 1022 is weighted in a multiplier 1032 with factor '-2', the output signal of delay 1024 is weighted in a multiplier 1033 with factor '5', the output signal of delay 1026 is weighted in a multiplier 1034 with factor '-2' and the output signal of delay 1028 is weighted in a multiplier 1035 with factor '-3'. The output of multipliers 1031, 1032 and 1033 is combined in an adder 1036 and forms the first differentiating filter output and is fed via an absolute value circuit 1041 to the first input of a minimum value circuit 1042. The output of multipliers 1033, 1034 and 1035 is combined in an adder 1037 and forms the second differentiating filter output and is fed via an absolute value circuit 1043 to the second input of minimum value circuit 1042. The minimum of the absolute output values of both filters represents the detection signal. The minimum functions ensure, that only in the transition region or in the center of a detail impulse an output signal significantly different from zero will be generated. A remainder of the subcarrier near a transition or a detail impuls results in a small output signal for one of the two differentiating filters. In this case a detection signal is suppressed.

Despite of the precaution described above a noisy input signal can still confuse the edge detector. An additional lowpass filtering of the detection signal becomes therefore necessary (average over three pixels). The output of circuit 1042 passes two serially connected one-clock delays 1044 and 1045, the input and outputs, respectively, of which are combined in an adder 1046. In a subsequent multiplier 1047 the output is multiplied by 1/6.

After a nonlinear weighting the detection signal (output of soft switch 0259) on output 1002 controls the nonlinear adding (in adder 0263) of the high frequency components to the output signal of lowpass 0261.

The nonlinear weighting represents in principle the application of a threshold in combination with a soft decision for the adding of the highpass component. The output signal of multiplier 1047 is passed via soft decision circuit 1055 (soft decision range from 16 to 20, output '4' at input '20') and delay 1056 (e.g. seven clocks) to the first input of maximum value circuit 1057.

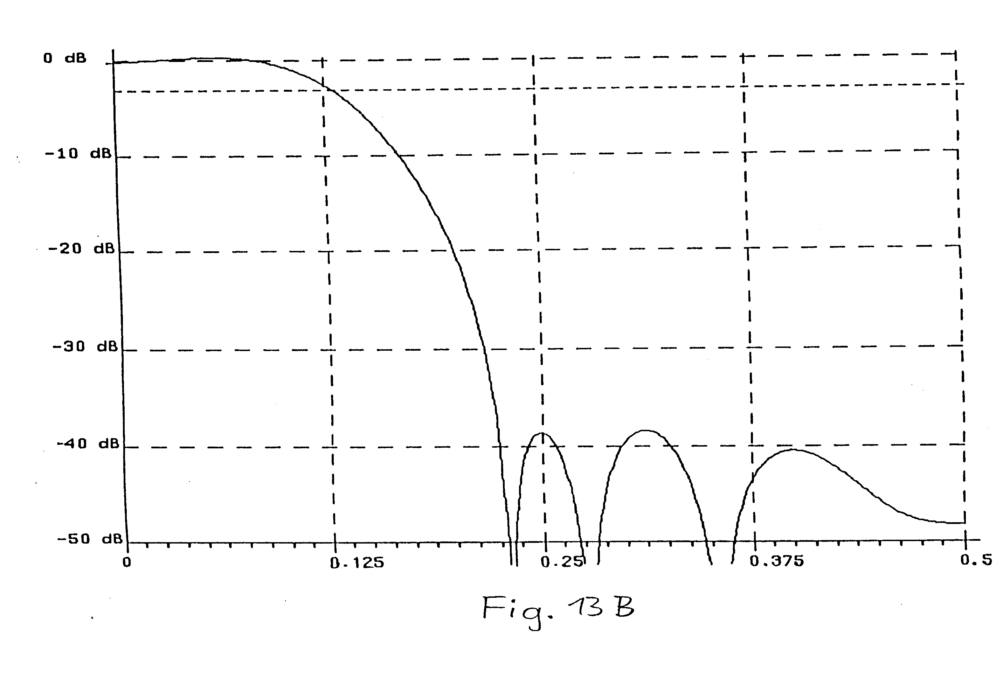

The applied thresholds in threshold circuit 1054 should allow to suppress the occurrence of the remainders of the subcarrier amplitude near transitions which are still present in the highpass component. In order to add also the highpass component of detail impulses with smaller amplitudes without a disturbing rest of the subcarrier in the vicinity of the impulses the threshold has to be adaptively controlled (via an subtractor 1053) by the detection signal itself. The threshold in circuit 1054 varies with the strongly lowpass filtered detection signal which represents more or less the weight or the area under the detection impulse. If the area under the detection impulse is large, the threshold will also be high and vice versa. Therefore, the output signal of multiplier 1047 is also passed via a threshold filter 1051 (depicted in Fig. 12), a maximum value circuit 1052, subtractor 1053 and threshold circuit 1054 to the second input of maximum value circuit 1057. The second input of circuit 1052 is supplied with value '5'. In subtractor 1053 the output of circuit 1052 and output signal 0503 (noise level) of the burst analysing circuit 0235, which is present at input 1004 and is multiplied in a multiplier 1018 by 1/4, are subtracted from the input signal of filter 1051.

Output signal α from cross colour detector 0242 at input 1005 passes an comparator 1017 which outputs zero, if the input is less than zero, and outputs value '4' otherwise, and the output of which enables maximum value circuit 1057. Soft-switch 0259 is represented by a multiplier 1014 which is controlled by the output of circuit 1057 and by a subsequent multiplier 1015 which multiplies by factor 1/4. The second input of multiplier 1014 is connected at input 1003 to the output of subtractor 0254.

A further improvement of the edge detection can be achieved by a kind of peaking of the detector input signal around 3MHz which will help to detect fine details in the luminance signal. Therefore, instead of the output signal of filter 0261 the output of the separate lowpass filter 0262 is used, the edge frequency of which is slightly higher than that of filter 0261.

The input signal 1201 of threshold filter 1051, which is depicted in Fig. 12 in more detail, passes serially a one-clock delay 1211, a three-clock delay 1212, two one-clock delays 1213 and 1214, a three-clock delay 1215 and a one-clock delay 1216. The input signal 1201 and the output of delay 1216 are combined in an adder 1221 and multiplied by factor 2 in a multiplier 1222. The outputs of delay 1211 and 1215 are combined in an adder 1223. The outputs of delay 1212 and 1214 are combined in an adder 1224. The outputs of adder 1223 and adder 1224 are combined in an adder 1226. The outputs of multiplier 1222 and adder 1226 are combined in an adder 1227. The output of delay 1213 is multiplied by 2 in a multiplier 1225 the output of which is combined in an adder 1228 with the output of adder 1227. The output of adder 1228 is multiplied in a multiplier 1229 by 1/16 (e.g. shift operation), resulting in output signal 1202.

The inventive Y/C separation uses several lowpass, bandpass, and highpass filters with quite different applications. In Fig.2 there are four bandpass filters 0221 to 0224 used for the selection of the FM subcarrier. In the present approach for all four bandpass filter the same frequency behaviour is chosen for simplicity. It may be the case that the requirements of these filters are different and that they can be optimised to get a better performance of the subcarrier reconstruction.

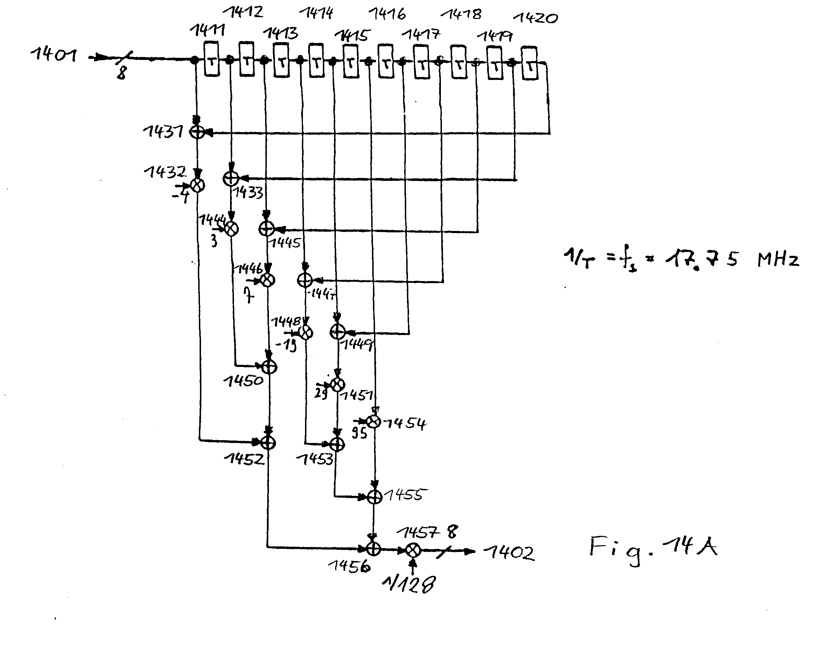

Lowpass filter 0262 which performs the separation of the cross talk free luminance component from the incoming composite signal possesses a large roll-off factor and shows only a relatively small amount of ringing, if the highpass component is not added. Its frequency response is depicted in Fig. 13B.

The input signal 1301 of lowpass filter 0262, which is depicted in Fig. 13A in more detail, passes serially twelve one-clock delays 1311 to 1322. The input signal 1301 and the output of delay 1322 are combined in an adder 1331 and multiplied by factor -3 in a multiplier 1332. The outputs of delay 1311 and 1321 are combined in an adder 1333 and multiplied by factor -9 in a multiplier 1334. The outputs of delay 1312 and 1320 are combined in an adder 1335 and multiplied by factor -8 in a multiplier 1337. The outputs of delay 1313 and 1319 are combined in an adder 1338 and multiplied by factor 7 in a multiplier 1341. The outputs of delay 1314 and 1318 are combined in an adder 1342 and multiplied by factor 35 in a multiplier 1343. The outputs of delay 1315 and 1317 are combined in an adder 1344 and multiplied by factor 65 in a multiplier 1346.

The outputs of multiplier 1332 and 1334 are combined in an adder 1336. The outputs of multiplier 1337 and 1341 are combined in an adder 1345. The outputs of multiplier 1343 and 1346 are combined in an adder 1348. The outputs of adder 1336 and 1345 are combined in an adder 1347. The output of delay 1316 is multiplied by factor 77 in a multiplier 1349 the output of which is combined in an adder 1350 with the output of adder 1348. The outputs of adder 1347 and 1350 are combined in an adder 1351 and multiplied in a multiplier 1352 by 1/256 (e.g. shift operation, from the output of which the input signal 1301 is subtracted in a subtractor 1353, resulting in output signal 1302.

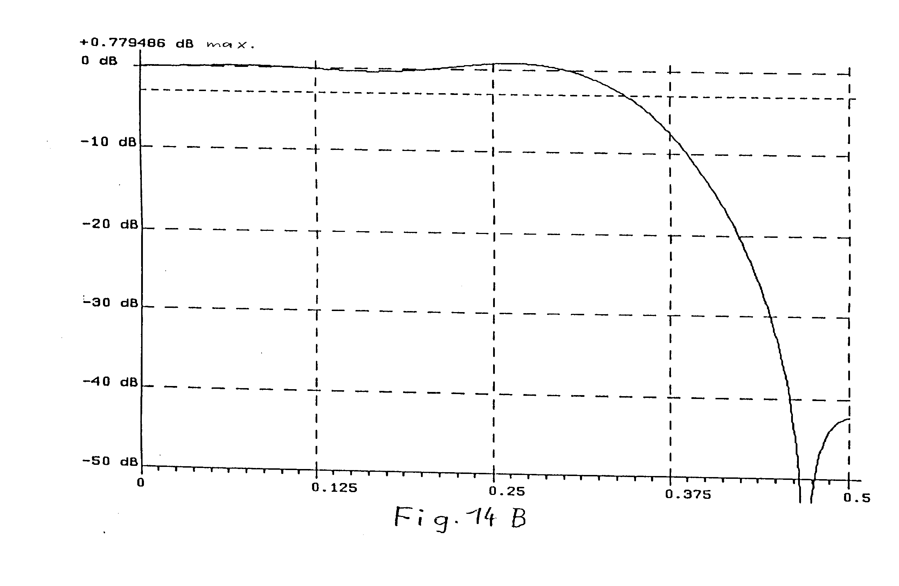

The bandlimiting lowpass filter 0253 with a cut-off frequency of 6MHz represents a channel filter which suppresses higher frequency components coming from the subcarrier reconstruction circuit. Its frequency response is depicted in Fig. 14B. In order to avoid any disturbances with a possible NICAM subcarrier which could be introduced, the cut-off frequency should be reduced to 5.8MHz.

The input signal 1401 of filter 0253, which is depicted in Fig. 14A in more detail, passes serially ten one-clock delays 1411 to 1420. The input signal 1401 and the output of delay 1420 are combined in an adder 1431 and multiplied by factor -4 in a multiplier 1432. The outputs of delay 1411 and 1419 are combined in an adder 1433 and multiplied by factor 3 in a multiplier 1444. The outputs of delay 1412 and 1418 are combined in an adder 1445 and multiplied by factor 7 in a multiplier 1446. The outputs of delay 1413 and 1417 are combined in an adder 1447 and multiplied by factor -19 in a multiplier 1448. The outputs of delay 1414 and 1416 are combined in an adder 1449 and multiplied by factor 29 in a multiplier 1451.

The outputs of multiplier 1444 and 1446 are combined in an adder 1450. The outputs of multiplier 1448 and 1451 are combined in an adder 1453. The outputs of multiplier 1432 and adder 1450 are combined in an adder 1452. The output of delay 1415 is multiplied by factor 95 in a multiplier 1454 the output of which is combined in an adder 1455 with the output of adder 1453. The outputs of adder 1452 and 1455 are combined in an adder 1456 and multiplied in a multiplier 1457 by 1/128 (e. g. shift operation), resulting in output signal 1402.

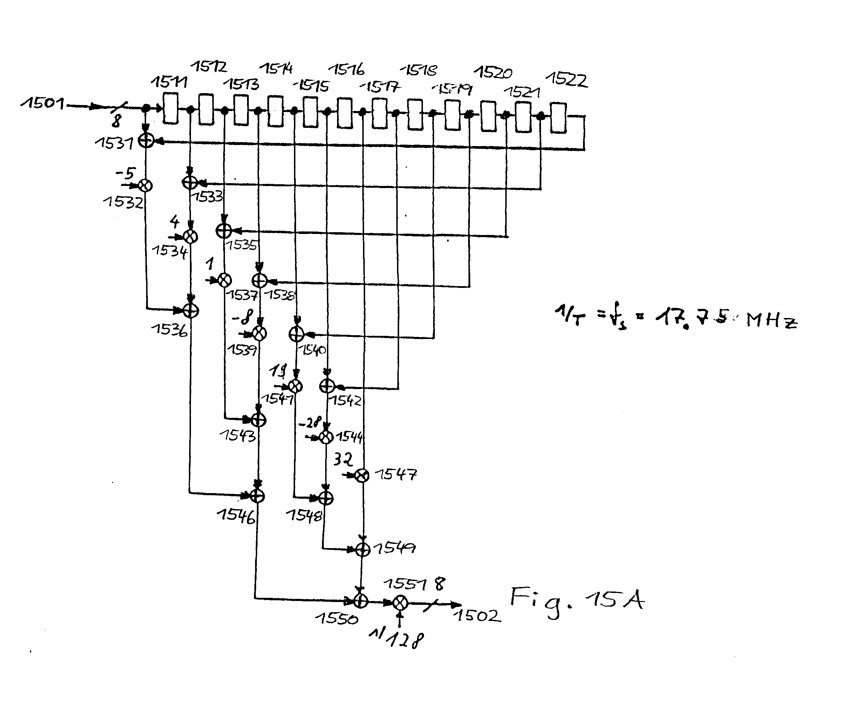

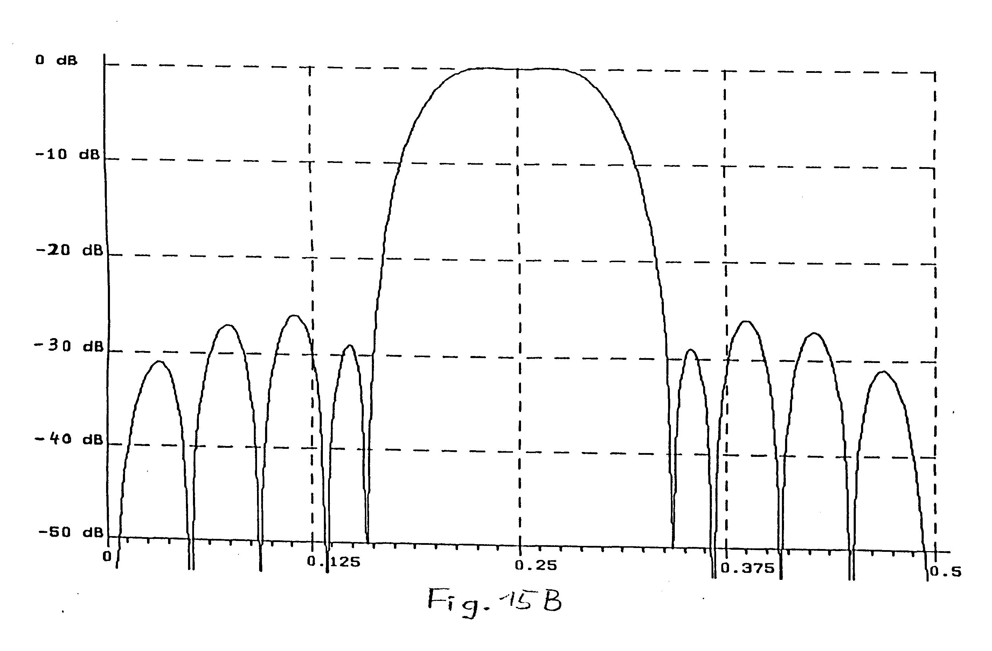

The frequency response of the four bandpass filters 0221 to 0224 for the separated "clean" chrominance signal is shown in Fig. 15B. The bandwidth of these filters can be adjusted according to the current S/N ratio of the incoming composite signal CVBS.

The input signal 1501 of these filters, which is depicted in Fig. 15A in more detail, passes serially twelve one-clock delays 1511 to 1522. The input signal 1501 and the output of delay 1522 are combined in an adder 1531 and multiplied by factor -5 in a multiplier 1532. The outputs of delay 1511 and 1521 are combined in an adder 1533 and multiplied by factor 4 in a multiplier 1534. The outputs of delay 1512 and 1520 are combined in an adder 1535 and multiplied by factor 1 in a multiplier 1537. The outputs of delay 1513 and 1519 are combined in an adder 1538 and multiplied by factor -8 in a multiplier 1539. The outputs of delay 1514 and 1518 are combined in an adder 1540 and multiplied by factor 19 in a multiplier 1541. The outputs of delay 1515 and 1517 are combined in an adder 1542 and multiplied by factor -28 in a multiplier 1544.

The outputs of multiplier 1532 and 1534 are combined in an adder 1536. The outputs of multiplier 1537 and 1539 are combined in an adder 1543. The outputs of multiplier 1541 and adder 1544 are combined in an adder 1548. The output of delay 1516 is multiplied by factor 32 in a multiplier 1547 the output of which is combined in an adder 1549 with the output of adder 1548. The outputs of adder 1536 and 1543 are combined in an adder 1546 and the outputs of adder 1546 and 1549 are combined in an adder 1550 and multiplied in a multiplier 1551 by 1/128 (e.g. shift operation), resulting in output signal 1502.

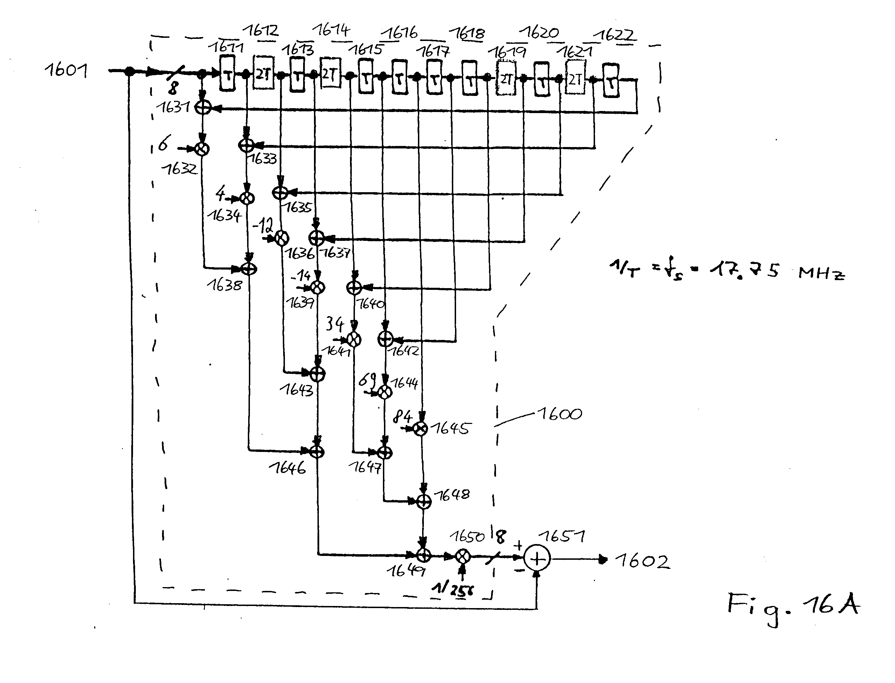

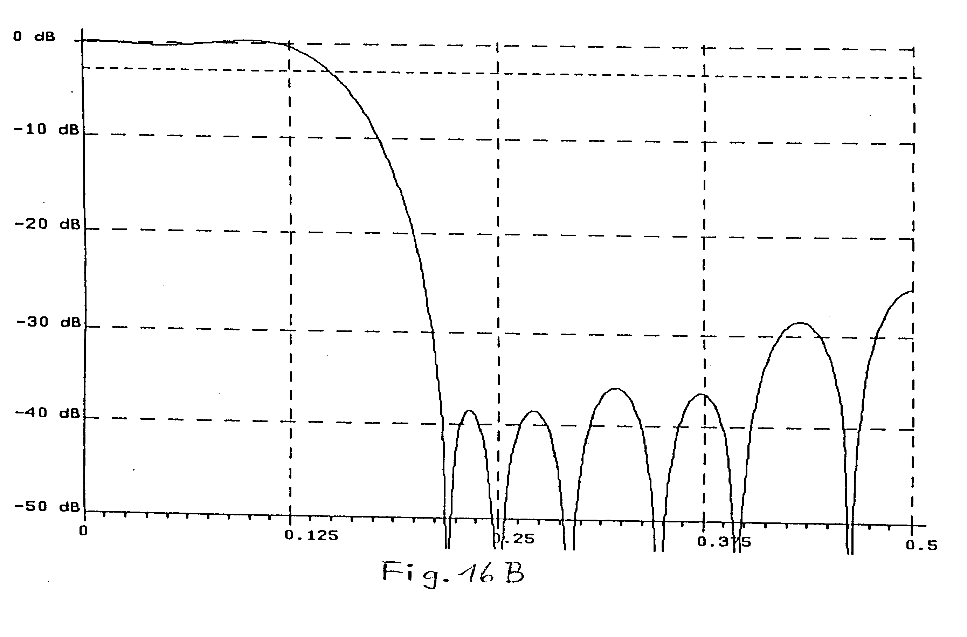

The highpass filter (lowpass filter 0252 and subtractor 0254) for the high frequency components or the luminance signal is realised by a complementary highpass filter. This filter in principle realises a flat frequency response up to the cut-off frequency given by the bandlimiting filter 0253. The frequency response of the respective lowpass filters 0252 and 0261 is depicted in Fig. 16B. In order to achieve a better sensitivity for the edge detector the frequency response of the complementary highpass filter can be modified by means of a frequency peaking around 3MHz.

The input signal 1601 of this kind of lowpass filter 1600, which is depicted in Fig. 16A in more detail, passes serially a one-clock delay 1611, a two-clock delay 1612, a one-clock delay 1613, a two-clock delay 1614, four one-clock delays 1615 to 1618, a two-clock delay 1619, a one-clock delay 1620, a two-clock delay 1621 and a one-clock delay 1622. The input signal 1601 and the output of delay 1622 are combined in an adder 1631 and multiplied by factor 6 in a multiplier 1632. The outputs of delay 1611 and 1621 are combined in an adder 1633 and multiplied by factor 4 in a multiplier 1634.

The outputs of delay 1612 and 1620 are combined in an adder 1635 and multiplied by factor -12 in a multiplier 1636. The outputs of delay 1613 and 1619 are combined in an adder 1637 and multiplied by factor -14 in a multiplier 1639. The outputs of delay 1614 and 1618 are combined in an adder 1640 and multiplied by factor 34 in a multiplier 1641. The outputs of delay 1615 and 1617 are combined in an adder 1642 and multiplied by factor 69 in a multiplier 1644.

The outputs of multiplier 1632 and 1634 are combined in an adder 1638. The outputs of multiplier 1631, and 1639 are combined in an adder 1643. The outputs of multiplier 1641 and adder 1644 are combined in an adder 1647. The output of delay 1616 is multiplied by factor 84 in a multiplier 1645 the output of which is combined in an adder 1648 with the output of adder 1647. The outputs of adder 1638 and 1643 are combined in an adder 1646 and the outputs of adder 1646 and 1648 are combined in an adder 1649 and multiplied in a multiplier 1650 by 1/256 (e.g. shift operation). The input signal 1601 is subtracted in a subtractor 1651 (corresponds to 0254) from the output of this multiplier, resulting in output signal 1602.

In terms of line delays for the presented algorithm approximately 6.5 TV line delays with 8bits and full clock rate of 17.750MHz are required. There exists a certain trade-off between the number of line delays and the number of bandpass filters used in the inventive Y/C separation. The number of bandpass filters can be reduced at the expense of additional line delays, but this point is of less interest for the IC design because the realisation of a bandpass filter is less complex than a line delay unit.

The realisation of the cross colour detector 0242 and edge detector 0258 represents a strong non-regular structure. The presented structure reflects a straight way for finding a reliable algorithm. If using e.g. a neural network, a more regular structure could be found.

The proposed Y/C separation algorithm exhibits certain components which can also be found in a complete digital SECAM decoder (see cited applications of the applicant) like: cordic processing, line delays, bandpass filters, etc. The optimization of these cells for the IC design seems to be very advantageous because they appear several times in the Y/C separation algorithm, for instance, four times the cordic algorithm.

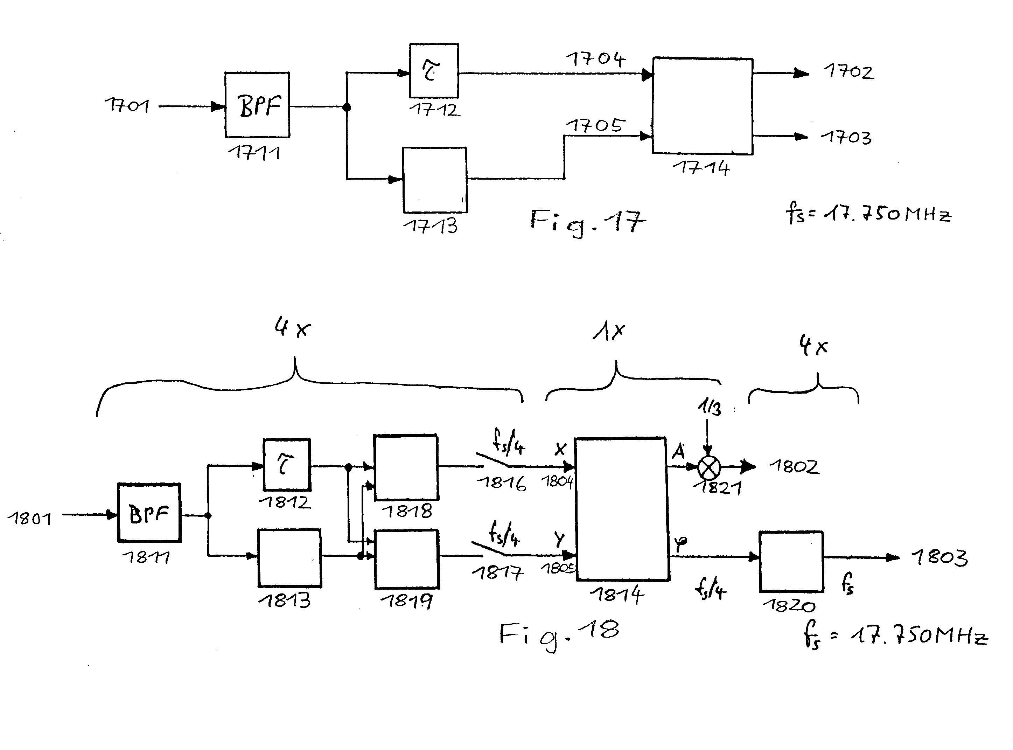

Certain processing blocks in Fig. 2 can be combined, like the bandlimiting filter and the complementary highpass filter. Therefore, the principle operation of the subcarrier reconstruction circuits 0231 and 0234 and of the amplitude/phase separation circuits 0232 and 0233 will be explained in connection with Fig. 17. The signal at input 1701 coming from the matched filter is bandpass filtered 1711 and fed via a delay 1712 (inphase input 1704) and via a Hilbert filter 1713 (quadrature input 1705) to a cordic processor 1714, which outputs amplitude 1702 and phase 1703 of the reconstructed carrier.

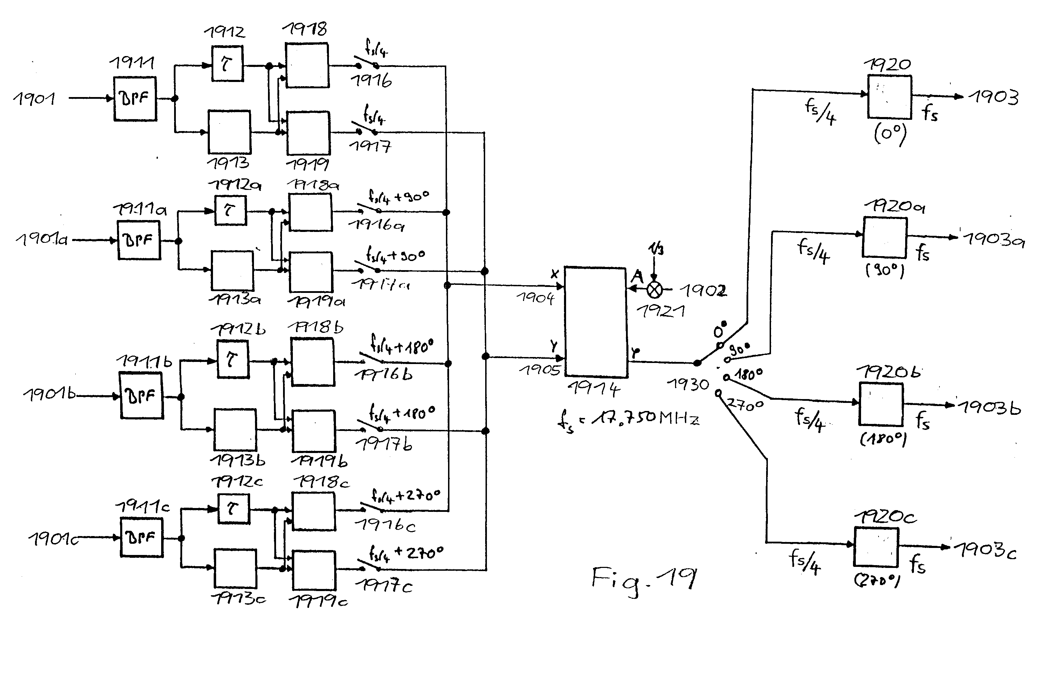

In order to reduce the complexity of the Y/C separation IC design, a multiplex structure for the four subcarrier reconstruction blocks 0231 to 0234 has been developed. The aim of the multiplex structure is to downsample each signal path by a factor of four, before the cordic processor calculates the current angle of the FM signal. Then, only one cordic processor is necessary for the whole IC. Fig. 18 illustrates the processing within one branch. Items 1801 to 1805 and 1811 to 1814 correspond to items 1701 to 1705 and 1711 to 1714 of Fig. 17. At output 1803 the downsampled angle has to be interpolated to its original data rate. The so-called 'downsampling without prefiltering of the angle' does not allow a proper reconstruction of the missing samples carried out by the interpolation filter 1820 at the phase output 1803 of processor 1814. For that reason, phase averagers 1818 and 1819 prior to the downsampling switches 1816 and 1817 at the inputs of processor 1814 are foreseen. The amplitude output of processor 1814 is corrected by 1/3 in a multiplier 1821, because the processor is required once, whereas the prefilters of angle, in which a 3-pixel average is carried out, are arranged in four parallel branches. That means, only one 1/3-multiplier is required instead of 4.

The complete multiplex structure is given in Fig. 19. Items 1901 to 1905, 1911 to 1914, 1916 to 1919, 1920 and 1921 correspond to items 1801 to 1805, 1811 to 1814, 1816 to 1819, 1820 and 1920 of Fig. 18. Indices a, b and c belong to the three other branches. The downsampling for each signal path can be realised be a shift of 90 degree of the downsampling clocks Fs/4 with respect to each other. That necessitates the application of respective different coefficients in the interpolation filters 1920 and 1920a to 1920c, which are connected to processor 1914 via switch 1930, for each specific time instance. Other solutions are also possible.

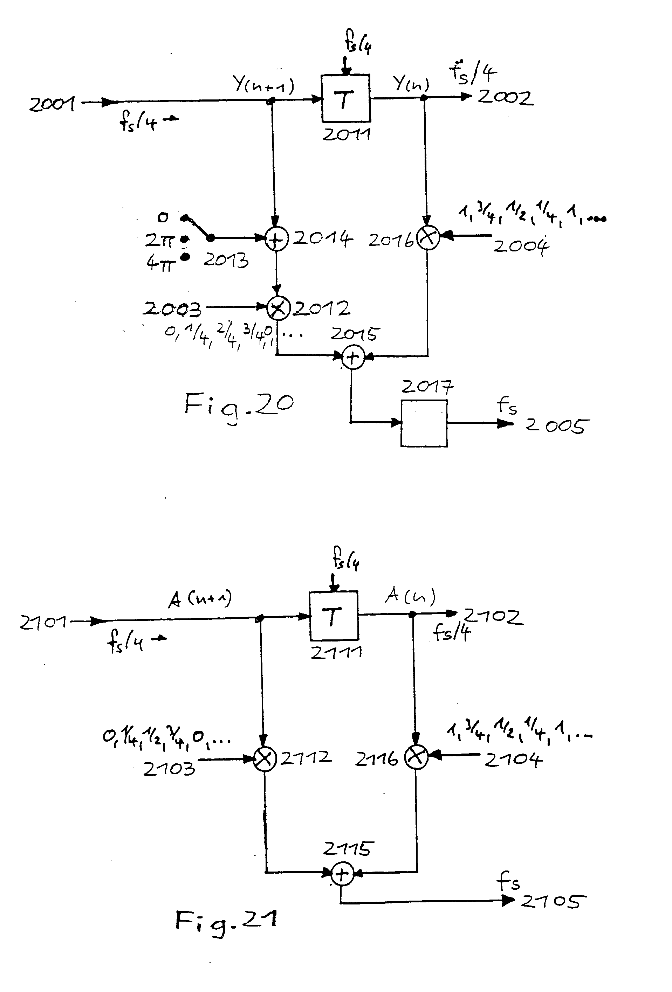

For interpolating the missing angle samples in these interpolation filters, which are shown in Fig. 20 in more detail, only two coefficients active at one time instance are used. This filter consists of four different subsets of coefficients which allow to reconstruct the missing samples at the corresponding position:

Subset 1 0, 1/4, 1/2, 3/4
Subset 2 1, 3/4, 1/2, 1/4.

Input 2001 ($f_s/4$ sampling) is connected to a one-clock delay 2011 ($f_s/4$ sampling) and to an adder 2014. The output of the one-clock delay is connected to output 2002 and to a second multiplier 2016 which receives at his second input 2004 the first subset of coefficients. Since the angle output $\rho$ of the cordic processor supplies only values within the range of $-\pi$ and $+\pi$, for the interpolation of the monotonically increasing angle a correction of $4\pi$ or $2\pi$, depending on the values used for the interpolation, has to be taken into account. Therefore, prior to the input of a first multiplier 2012 which receives at his second input 2003 the second subset of coefficients, the values 0, $2\pi$ or $4\pi$ are added accordingly in adder 2014 via a switch 2013.

If $\rho(n) < 0$ and $\rho(n+1) \geqq \rho(n) + \pi$ then 0;
else if $\rho(n) < 0$ and $\rho(n+1) < \rho(n) + \pi$
or $\rho(n) \geq 0$ and $\rho(n+1) \geq \rho(n)-\pi$ then $2\pi$;
else if $\rho(n) \geq 0$ and $\rho(n+1) < \rho(n)-\pi$ then $4\pi$
is selected by this switch.

The outputs of multipliers 2016 and 2012 are combined in an adder 2015 and passed through a modulo-$2\pi$ circuit 2017 to the second output 2005 ($f_s$ sampling).

For the interpolation of the downsampled amplitude information a similar filter structure can be used. This filter is depicted in Fig. 21. Since amplitude A remains in a certain amplitude range, a correction like in the phase interpolator (by modulo-$2\pi$ circuit 2017 and adder 2014) is not necessary. Items 2101 to 2105 and 2111 to 2115 correspond to items 2001 to 2005 and 2011 to 2015 of Fig. 20.

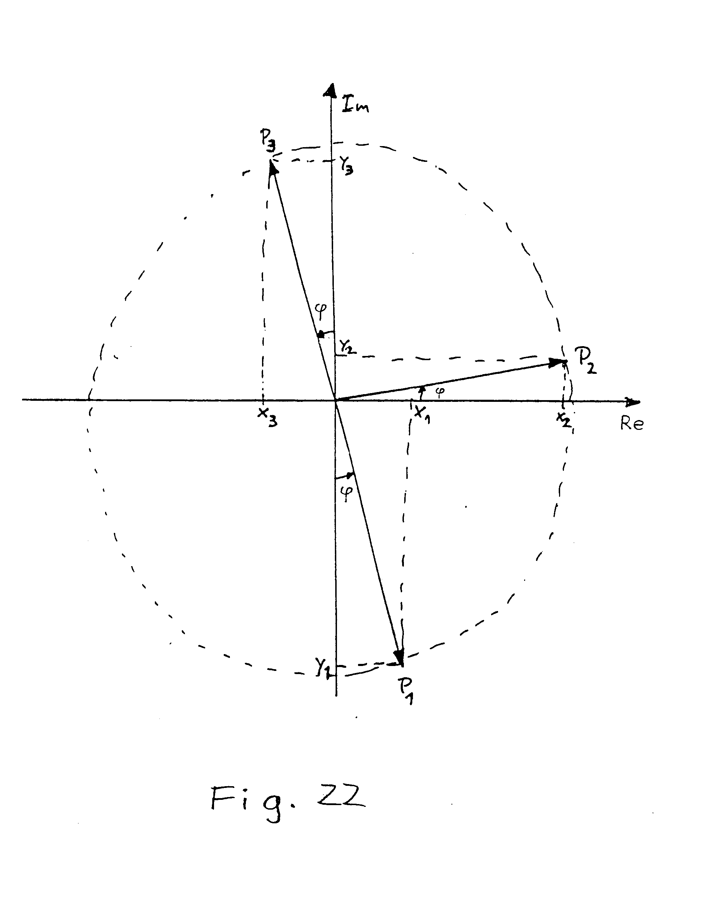

For a better reconstruction of the missing samples the phase averagers 1818 and 1819 have been introduced. This averaging is based on the assumption that the increment of the angle between to succeeding samples is in the order of 90 degrees. Therefore, an average for the inphase and quadrature component can be achieved as reconstructed in Fig. 22. For example:

$$y_{2\ averaged} = (y_2 + x_1 - x_3)/3$$

$$x_{2\ averaged} = (x_2 - y_1 + y_3)/3$$

For a given time instant the pointer for the FM burst in Fig. 22 is given by $P_2$, whereas for the previous and the succeeding sample of the FM burst the pointers are given by $P_1$ and $P_3$, respectively. A closer look at Fig. 22 reveals that for the $x_2$ component to be averaged, in pointer $P_3$ $y_3$ - (and in pointer $P_1$ $y_1$) corresponds to. In the same way the $y_2$ component (to be averaged) of pointer $P_2$ coressponds to $x_1$ of pointer $P_1$ and $x_3$ of pointer $P_3$.

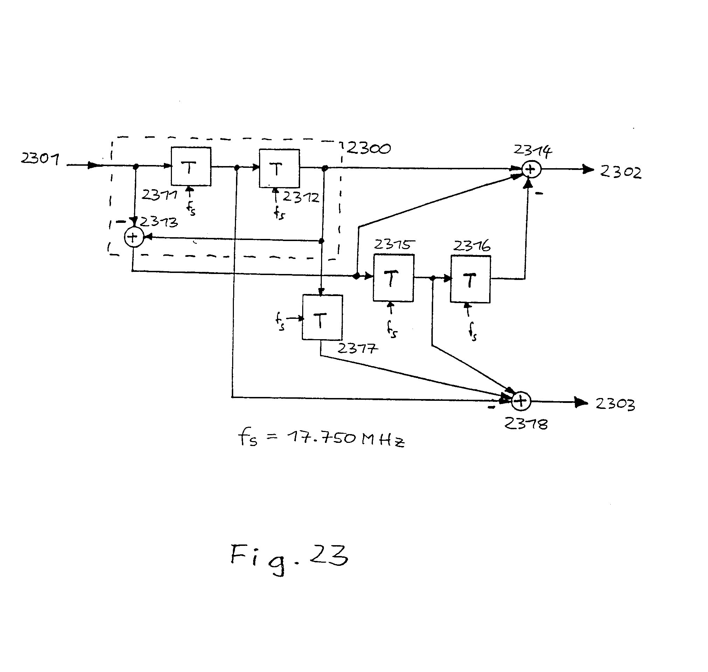

Advantageously, the phase or angle averager does only add a negligible complexity, if it is combined with the Hilbert filter 1713, 1813. Fig. 23 shows the resulting block diagram. Input 2301 of of the Hilbert filter is connected to a first one-clock delay 2311 and to a subtractor 2313. The output of delay 2311 is subtracted in a second combiner 2318 from the sum of its other input signals and is connected to a second one-clock delay 2312, the output of which is subtracted in subtractor 2313 from the input signal 2301 and is fed to a third one-clock delay 2317 and to a first combiner 2314. The output of this subtractor is also connected to combiner 2314 and to a fourth one-clock delay 2315. The output of this delay is connected to a fifth one-clock delay 2316 and to the second combiner 2318. The output signal of delay 2316 is subtracted in combiner 2314 from the sum of the other two input signals. The output signal of delay 2315 is also fed to combiner 2318. At the output 2302 of combiner 2314 the averaged inphase signal and at the output 2303 of combiner 2318 the averaged quadrature signal are available for the Cordic processor. Clock frequency is 17.750 MHz.

A great deal of the SECAM cross talk artefacts can be cancelled by the inventive Y/C separation. The results look quite similar to those obtained in the PAL standard by using a comb filter technique. The subjective picture quality of the reconstructed SECAM pictures is not compromised by new artefacts introduced by the Y/C separation algorithm. The noise behaviour is quite moderate.

The resulting picture quality can even be improved by means of an appropriate prefiltering in the SECAM encoder.

Horizontal colour transitions within the standard SECAM system show an extremely bad behaviour which becomes obvious in comparison to the sharp vertical transitions reproduced by means of the adaptive vertical interpolation filter in the above cited digital SECAM decoder applications of the applicant. Advantageously a matched CTI (chrominance transients improvement) technique, e.g. peaking, can be used to improve the horizontal colour transitions.

The filter responses, numbers given and thresholds may vary according to specific SECAM decoder requirements and transmission conditions. The processing of Fig. 2 could be modified according to Fig. 1 by calculating an improved chrominance signal and subtracting it from the CVBS signal to get the Y component.

The invention can e.g. be used in TV receivers and VCR's.

## Claims

1. Method for luminance/chrominance separation, **characterised in** that for generating a luminance component (Y) and a chrominance component (C) from a SECAM CVBS signal filter means (011) extract the shared frequency range of luminance and chrominance of the CVBS signal, the output signal of which is fed to combining means (014) in which the output signal of said filter means (011) which also has been vertically averaged (013) over at minimum three - especially five - lines, is subtracted therefrom and that in subcarrier reconstruction means (015) subsequent to said combining means the phase of the subcarrier is measured and used for controlling a cosine look-up table which outputs the chrominance component (C), which is also subtracted (012) from the CVBS signal thereby forming the luminance component (Y).

2. Method for luminance/chrominance separation, **characterised in** that for generating a luminance component (Y) and a chrominance component (C) from a SECAM CVBS signal:
   - the luminance component comprises the lowpass filtered (0261) crosstalk-free frequency range of the appropriately delayed (0214) CVBS signal, to which a highpass frequency range is added (0263);
   - the chrominance component is generated by subtracting (0264) the luminance component from said delayed CVBS signal;
   - said highpass frequency range is constructed by subtracting (0251) from said delayed CVBS signal a reconstructed subcarrier (0203) and by highpass filtering (0252 and 0254) the resulting signal complementary to said lowpass filtering (0261);
   - the adding (0263) of said highpass frequency range is adaptively enabled (0259) according to the presence of horizontal luminance transitions (0258) and/or according to the presence of multi-burst structures (0242) in said CVBS signal.

3. Method according to claim 2, **characterised in** that for evaluating (0258) said horizontal luminance transitions, to said lowpass filtered (0261) crosstalk-free frequency range said highpass frequency range, which has passed coring means (0256), is added (0257).

4. Method according to claim 3, **characterised in** that a peaking is carried out within the common range of the both frequency ranges.

5. Method according to any of claims 2 to 4, **characterised in** that for detecting (0258) said horizontal transitions two symmetrical differentiating filter means (1021 - 1028, 1031 - 1035, 1036, 1037) are used, the frequency response of which has no zero crossing around the chrominance FM subcarrier, and that the minimum (1042) of the absolute output values (1041, 1043) of these filter means is calculated and the output signal for at minimum three pixels is averaged (1044 - 1047).

6. Method according to claim 5, **characterised in** that said averaged (1044 - 1047) output signal passes two parallel signal paths, the maximum (1057) output of which represents the final horizontal transition signal:
   - the first path comprises soft decision means (1055) - especially with a soft decision range from 16 to 20 (of 8 bit);
   - the second path comprises threshold means (1054) adaptive to the lowpass filtered averaged output signal and/or the actual noise level (1004).

7. Method according to any of claims 2 to 6, **characterised in** that said reconstructed subcarrier (0203) is composed of the output signals of a first and a second subcarrier signal path, wherein:
   - the percentage of the two path output signals is mixed in second soft switch means (0244) under the control of cross colour detector means (0242) detecting said multi-burst structures;
   - in the first path a difference signal (0303) between the CVBS signal and a CVBS signal having been averaged (0311 - 0314, 0321, 0322) over at minimum three lines - especially five - and having been bandpass (0221) filtered, passes first subcarrier reconstruction means (0231), which deliver a standardised subcarrier with normal phase as output signal, the percentage of which is increased in case of detecting (0242) a multi-burst structure;
   - in the second path said delayed (0214) CVBS signal bandpass (0224) filtered accordingly and passes second subcarrier reconstruction means (0234) controlling envelope modulation means (0243), which deliver a subcarrier with anti-bell characteristic as output signal, the percentage of which is increased otherwise.

8. Method according to claim 7, **characterised in** that burst analysing means (0235) receiving the bandpass (0224) filtered CVBS signal calculate the burst and noise amplitude which is used to control said cross colour detector means (0235) and said first subcarrier reconstruction means (0231) with respect to signal amplitude and said horizontal transition means (0258) with respect to noise.

9. Method according to claim 8, **characterised in** that said cross colour detector means (0242) receive amplitude (A1) and phase ($\rho$1) information from first amplitude/phase separation means (0232) and phase ($\rho$2) information from second amplitude/phase separation means (0233), wherein:
   - said first amplitude/phase separation means receive the vertically lowpass (0212) filtered and bandpass (0222) filtered CVBS signal;
   - said second amplitude/phase separation means receive the bandpass (0223) filtered and respectively delayed (0214) CVBS signal;
   - in said cross colour detector means the amplitude (A1) information from said first amplitude/phase separation means is compared with preselected percentages (THMIN, THMAX) of said burst amplitude and the phase ($\rho$1, $\rho$2) information from said first and second amplitude/phase separation means are compared and logically AND (0731) combined with the result of said first comparison and with a vertical transition (0213) information.

10. Method according to any of claims 7 to 9, **characterised in** that said first (0231) and second (0234) subcarrier reconstruction means and said first (0232) and second (0233) amplitude/separation means contain Cordic processor means (0416, 0616, 0816, 0916, 1714, 1814) which receive its input signals (X, Y) via Hilbert filter means (1713, 1813).

11. Method according to claim 10, **characterised in** that said the output signals (X, Y) of said Hilbert filter means (1713, 1813) pass barrel shifter means (0415, 0615, 0815, 0915) before being fed to said Cordic processor means (0416, 0616, 0816, 0916, 1714, 1814).

12. Apparatus for a method according to any of claims 2 to 11 for generating a luminance component (Y) and a chrominance component (C) from a SECAM CVBS signal, comprising:
   - first lowpass filter means (0261) which deliver a crosstalk-free frequency range of the luminance component of the CVBS signal appropriately delayed by delay means (0214), to which a highpass frequency range is added in second adding means (0263);
   - second subtracting means (0264) in which the chrominance component is generated by subtracting the luminance component from said delayed CVBS signal;
   - first subtracting means (0251) in which from said delayed CVBS signal a reconstructed subcarrier (0203) is subtracted, subsequent third lowpass filter means (0253) for limiting the frequency range of said delayed CVBS signal in relation to the luminance bandwidth of a TV channel and highpass filter means (0252 and 0254) which filter the resulting signal complementary to said first lowpass filter means (0261), thereby constructing said highpass frequency range;
   - an edge detector (0258) detecting horizontal luminance transitions and a first soft switch (0259), supplying said second adding means (0263) with said highpass frequency range, the throughput of which is adaptively controlled according to the output of said edge detector and/or the output of cross colour detector means (0242) which detect the presence of multiburst structures in said CVBS signal.

13. Apparatus according to claim 12, **characterised in** that the input signal for said edge detector (0258) is generated by adding in first adding means (0257) the output signal of said first lowpass filter means (0261) to the output signal of coring means (0256) arranged subsequent to said highpass filter means.

14. Apparatus according to claim 13, **characterised in** that said first adding means (0257) instead of the output signal of said first lowpass filter means do add the output signal of second lowpass filter means (0262) operating on said delayed CVBS signal, the edge frequency of which is higher than that of said first lowpass filter means.

15. Apparatus according to any of claims 12 to 14, **characterised in** that for detecting (0258) said horizontal transitions two symmetrical differentiating filter means (1021 - 1028, 1031 - 1035, 1036, 1037) are used, the frequency response of which has no zero crossing around the chrominance FM subcarrier, and that in minimum means (1042) the minimum of the output signals of absolute value means (1041, 1043) subsequent to these filter means is calculated and the output signal for at minimum three pixels is averaged in subsequent averaging means (1044 - 1047).

16. Apparatus according to claim 15, **characterised in** that the output signal of said averaging means (1044 - 1047) passes two parallel signal paths, the maximum output of which is selected in maximum means (1057) and represents the final horizontal transition signal:
   - the first path comprises soft decision means (1055) - especially with a soft decision range from 16 to 20 (of 8 bit);
   - the second path comprises threshold means (1054) adaptive to the averaged output signal, which has been lowpass filtered in lowpass filtering means (1051 - 1053), and/or the actual noise level (1004).

17. Apparatus according to any of claims 12 to 16, **characterised in** that said reconstructed subcarrier (0203) is composed of the output signals of a first and a second subcarrier signal path, wherein:
   - the percentage of the two path output signals is mixed in second soft switch means (0244) under the control of cross colour detector means (0242) detecting said multi-burst structures;
   - in the first path a difference signal (0303) between the CVBS signal and a CVBS signal having been averaged in averaging means (0311 - 0314, 0321, 0322) over at minimum three lines - especially five - and having been filtered in first bandpass filtering means (0221), passes first subcarrier reconstruction means (0231), which deliver a standardised subcarrier with normal phase as output signal, the percentage of which is increased in case of detecting a multi-burst structure in said cross colour detector means;

- in the second path said delayed (0214) CVBS signal is filtered in fourth bandpass filtering means (0224) accordingly and passes second subcarrier reconstruction means (0234) controlling envelope modulation means (0243), which deliver a subcarrier with anti-bell characteristic as output signal, the percentage of which is increased otherwise.

18. Apparatus according to claim 17, **characterised in** that burst analyzing means (0235) receiving the output signal of the fourth bandpass filtering means (0224) calculate the burst and noise amplitude which is used to control said cross colour detector means (0235) and said first subcarrier reconstruction means (0231) with respect to signal amplitude and said horizontal transition means (0258) with respect to noise.

19. Apparatus according to claim 18, **characterised in** that said cross colour detector means (0242) receive amplitude (A1) and phase ($\rho$1) information from first amplitude/phase separation means (0232) and phase ($\rho$2) information from second amplitude/phase separation means (0233), wherein:
    - said first amplitude/phase separation means receive the CVBS signal after having been vertically lowpass filtered and bandpass filtered in vertical lowpass filtering means (0212) and second bandpass filtering means (0222);
    - said second amplitude/phase separation means receive the CVBS signal after having been respectively delayed and bandpass filtered in said delay means (0214) and third bandpass filtering means (0223);
    - in said cross colour detector means the amplitude (A1) information from said first amplitude/phase separation means (0232) is compared in comparing means (0710
    - 0717) with preselected percentages (THMIN, THMAX) of said burst amplitude and the phase ($\rho$1, $\rho$2) information from said first and second (0233) amplitude/phase separation means are compared in second comparing means (0721 - 0723) and logically combined in an AND gate (0731) with the result of said first comparison and with a vertical transition information calculated in vertical transition detector means (0213) from the CVBS signal.

20. Apparatus according to any of claims 17 to 19, **characterised in** that said first (0231) and second (0234) subcarrier reconstruction means and said first (0232) and second (0233) amplitude/separation means comprise Cordic processor means (0416, 0616, 0816, 0916, 1714, 1814) which receive its input signals (X, Y) via Hilbert filter means (1713, 1813).

21. Apparatus according to claim 20, **characterised in** that said the output signals (X, Y) of said Hilbert filter means (1713, 1813) pass barrel shifter means (0415, 0615, 0815, 0915) before being fed to said Cordic processor means (0416, 0616, 0816, 0916, 1714, 1814).

22. Apparatus according to any of claims 17 to 21, **characterised in** that said first (0221), second (0222), third (0223) and/or fourth (0224) bandpass filtering means have an equal frequency response.

23. Apparatus according to claim 22, **characterised in** that said first (0231) and second (0234) subcarrier reconstruction means and said first (0232) and second (0233) amplitude/separation means operate with single Cordic processor means (1914) the input (X, Y) and output (A, $\rho$) signals of which are connected to multiplexing switches (1916 - 1916c, 1917 - 1917c, 1930).

EP 0 597 160 A1

CVBS

Y

012

+

BPF 011

C

014

013

+

015

Fig. 1

Fig. 2

Fig. 3

Fig. 4A

Fig. 4B

EP 0 597 160 A1

Fig. 6A

Fig. 8

Fig. 9

Fig.12

Fig.6B

EP 0 597 160 A1

Fig. 5

Fig. 7A

Fig. 7B

Fig. 10

Fig. 11

EP 0 597 160 A1

Fig. 13A

Fig. 13 B

$$1/T = f_s = 12.75 \text{ MHz}$$

Fig. 74A

Fig. 14 B

EP 0 597 160 A1

$1/T = f_s = 17.75 \text{ MHz}$

Fig. 15A

Fig. 15 B

Fig. 16A

$1/T = f_s = 17.75 \text{ MHz}$

Fig. 16 B

EP 0 597 160 A1

Fig. 17

Fig. 18

Fig. 19

$f_s = 17.750 \, MHz$

EP 0 597 160 A1

Fig.20

Fig.21

Fig. 22

Fig. 23

$f_s = 17.750\,MHz$

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | EP-A-0 239 465 (ETAT  FRANCAIS) <br> * page 6, line 8 - page 8, line 7 * <br> * page 11, line 31 - page 14, line 19 * <br> --- | 1,2,12 | H04N9/78 |
| A | FR-A-2 666 188 (SGS-THOMSON MICROELECTRONICS  S.A.) <br><br> ----- | | |

| | |
|---|---|
| | TECHNICAL FIELDS SEARCHED (Int. Cl.5 ) |
| | H04N |

The present search report has been drawn up for all claims

| Place of search | Date of completion of the search | Examiner |
|---|---|---|
| THE HAGUE | 12 JULY 1993 | PIGNIEZ T.J.P. |

CATEGORY OF CITED DOCUMENTS

X : particularly relevant if taken alone
Y : particularly relevant if combined with another
 document of the same category
A : technological background
O : non-written disclosure
P : intermediate document

T : theory or principle underlying the invention
E : earlier patent document, but published on, or
 after the filing date
D : document cited in the application
L : document cited for other reasons

\& : member of the same patent family, corresponding
 document

EPO FORM 1503 03.82 (P0401)